# EUROPEAN PATENT APPLICATION

(11) **EP 4 468 245 A2**
(43) Date of publication of application: **27.11.2024**
(21) Application number: 24739382.0
(22) Date of filing: 03.04.2024
(51) Int. Cl.: G06T 11/60, G06T 7/10, G06T 7/60, G06T 7/90, G06T 7/20, G06V 10/762, G06F 3/048, G06T 19/20

(54) **IMAGE GENERATION BASED ON USER PREFERENCE, AND ELECTRONIC DEVICE THEREFOR**

(30) Priority: 03.04.2023 KR 20230043807; 08.06.2023 KR 20230073697
(71) Applicant: Samsung Electronics Co., Ltd, Suwon-si, Gyeonggi-do 16677 (KR)
(72) Inventor: SHEEN, Saebyuk, Suwon-si Gyeonggi-do 16677 (KR); KIM, Sojin, Suwon-si Gyeonggi-do 16677 (KR); NAM, Sungguk, Suwon-si Gyeonggi-do 16677 (KR); UM, Taewon, Suwon-si Gyeonggi-do 16677 (KR); LEE, Jaehan, Suwon-si Gyeonggi-do 16677 (KR); LIM, Yujin, Suwon-si Gyeonggi-do 16677 (KR)
(74) Representative: HGF
(86) International application number: PCT/KR2024/004339
(87) International publication number: WO 2024/210519

(57) **Abstract**

Various embodiments of the disclosure may include a display (160), a processor (120), and a memory (130). The memory stores instructions that, when executed by the processor, cause an electronic device to recognize one or more objects included in one or more stored images, determine categories corresponding to the recognized one or more objects, select at least one target object to be displayed on the display among the recognized one or more objects, determine arrangement information of the at least one target object based on the determined categories and the images, and provide a new image for display on the display in which the at least one target object is arranged based on the arrangement information. Various other embodiments are also possible.

## Description

### [Technical Field]

Various embodiments of the disclosure provide a user preference-based image generation method and an electronic device therefor.

### [Background Art]

In accordance with development of digital technologies, various types of electronic devices, such as a mobile terminal, a personal digital assistant (PDA), an electronic notebook, a smartphone, a tablet personal computer (PC), or a wearable device, have been widely used. The electronic devices have been continuously improved in terms of hardware and/or software of the electronic devices to support and increase functions thereof.

Users share their daily life or communicate with others having a similar or different preference through a social network service. Users may want to generate an image that represents their unique personality, different from other users.

### [Disclosure of Invention]

### [Technical Problem]

According to the present disclosure, there is provided a method and a device for recognizing an object (e.g., a person, a thing, or an animal) included in an image, generating a new image by arranging the object based on a category corresponding to the recognized object, and using the generated image as an album cover or background image.

### [Solution to Problem]

An electronic device (101) according to an embodiment may include a display (160), a processor (120), and memory (130), wherein the memory stores instructions that, when executed by the processor, cause the electronic device to recognize one or more objects included in one or more stored images, determine categories corresponding to the recognized one or more objects, select at least one target object to be displayed on the display among the recognized one or more objects, determine arrangement information of the at least one target object based on the determined categories and the images, and provide a new image for display on the display in which the at least one target object is arranged based on the arrangement information.

An operation method of an electronic device (101) according to an embodiment of the disclosure may include an operation of recognizing one or more objects included in one or more stored images, determining categories corresponding to the recognized one or more objects; selecting at least one target object to be displayed on the display among the recognized one or more objects, determining arrangement information of the at least one target object based on the determined categories and the images, and providing a new image for displaying on the display in which the at least one target object is arranged based on the arrangement information.

### [Advantageous Effects of Invention]

According to embodiments, a new image which better reflects a user preference and taste may be provided.

According to embodiments, by automatically generating an image representing a unique characteristic of the user compared to other users, user convenience may be improved.

According to embodiments, providing representative images that reflect characteristics of a user provides a more efficient approach to composing background images, album covers images etc. that are of more relevance to the user and may provide improved navigation and/or accessing of stored images.

Accordingly, to embodiments, user-relevant background images of electronic devices may be generated with no or reduced user input. Background images may also be periodically updated and renewed within no or reduced user input.

According to embodiments, images (e.g. background images) for displays of different sizes may be created and image synchronized between multiple displays of different sizes in a single electronic device.

According to embodiments, images that are unstructured (e.g. resemble a collage) but relevant to may be generated and used as background images or for other purposes.

According to embodiment, generated images may also allow increased numbers of objects to be displayed to a user via the extraction and overlapping of image objects such that increased information on the content of folder may be presented to a user.

### [Brief Description of Drawings]

FIG. 1 is a block diagram illustrating an electronic device in a network environment according to an embodiment.
FIG. 2 is a view illustrating an example of recognizing an object included in an image and providing a new image in an electronic device according to an embodiment.
FIG. 3 is a flowchart illustrating an operation method of an electronic device according to an embodiment.
FIG. 4 is a view illustrating an example of dividing an object display area in an electronic device according to an embodiment.
FIG. 5A is a flowchart illustrating a method of an electronic device for recognizing an object included in an image according to an embodiment.
FIG. 5B is a flowchart illustrating a method of an electronic device for determining a target object according to an embodiment.
FIG. 6 is a view illustrating an example of providing a new image including a title in an electronic device according to an embodiment.
FIG. 7 is a flowchart illustrating a method of an electronic device for generating an image including a title according to an embodiment.
FIGS. 8A and 8B are views illustrating an example of arranging an object in an object display area in an electronic device according to an embodiment.
FIG. 8C is a flowchart illustrating a method of an electronic device for arranging a target object according to an embodiment.
FIG. 9 is a view illustrating an example of determining an arrangement structure of an object in an electronic device according to an embodiment.
FIGS. 10A and 10B are views illustrating an example of changing a display position of an object in an electronic device according to an embodiment.
FIGS. 11A and 11B are views illustrating an example of applying a background color to an image in an electronic device according to an embodiment.
FIGS. 12A and 12B are views illustrating an example of utilizing a background image in an electronic device according to an embodiment.
FIG. 13 is a view illustrating an example of reconfiguring an image according to a size of a display in an electronic device according to an embodiment.
FIG. 14 is a view illustrating an example of displaying a background image differently according to a size of a display in an electronic device according to an embodiment.
FIGS. 15A and 15B are views illustrating an example of applying a decorating effect to a background image in an electronic device according to an embodiment.
FIG. 16 is a view illustrating an example of generating an image based on a story of an image in an electronic device according to an embodiment.
FIG. 17 is a view illustrating an example of applying a motion to an object included in an image in an electronic device according to an embodiment.
FIGS. 18A and 18B are views illustrating an example of generating a new image by using an image stored in a server in an electronic device according to an embodiment.

### [Mode for the Invention]

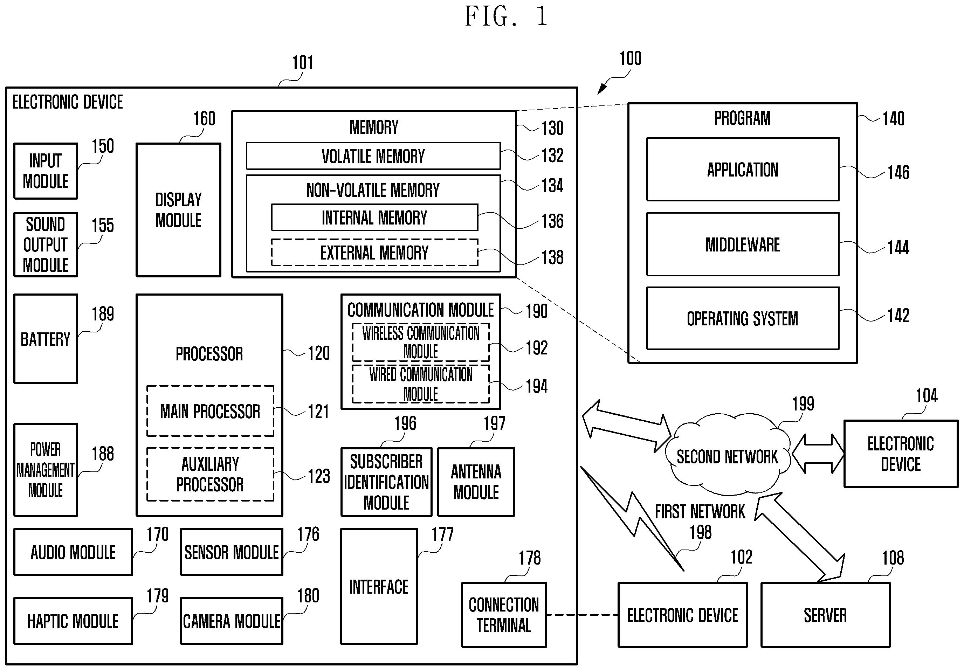

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

The implementations set out in this disclosure may combined in any appropriate manner unless such combinations are explicitly excluded or incompatible. Adaptations of the or more operations of the methods set out in this disclosure also fall within the scope of this disclosure. For examples, operations may be reordered or removed, or new operation introduced without departing from the scope of the present disclosure.

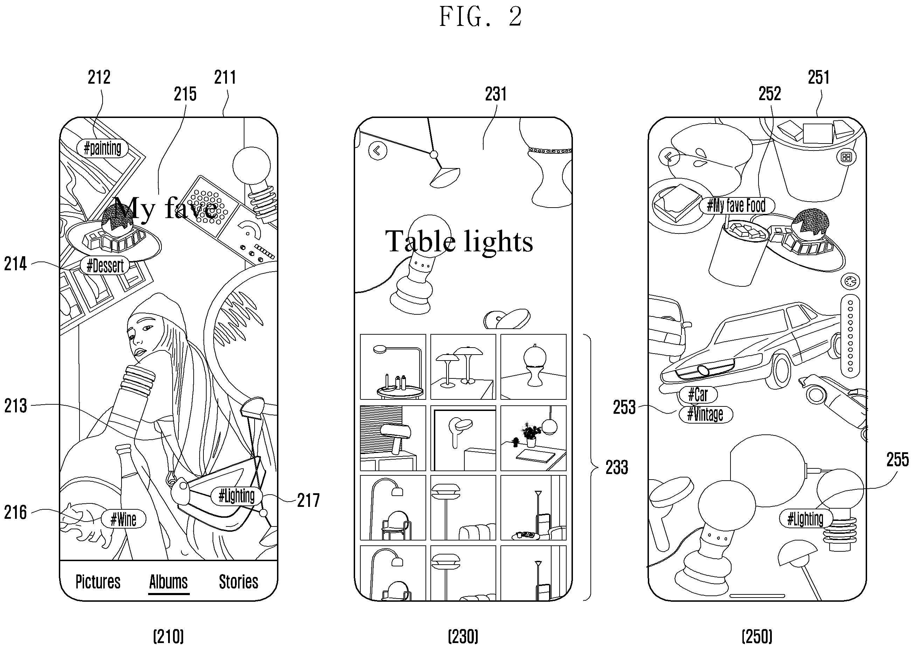

FIG. 2 is a view illustrating an example of recognizing an object included in an image and providing a new image in an electronic device according to an embodiment.

Referring to FIG. 2, an electronic device (e.g., the electronic device 101 in FIG. 1) may recognize an object(s) included in one or more images by analyzing the one or more images using a suitable known form of image recognition. The electronic device 101 may then generate a first image 211 based on the recognized object(s). The recognized object may indicate (i.e. represent) a subject included in an image or a subject of an image. For example, the electronic device 101 may recognize an object included in an image(s) by analyzing the image(s) stored in a memory (e.g., the memory 130 in FIG. 1) and also determine a category corresponding to the recognized object. Alternatively or additionally, with respect to images stored in a cloud server (e.g., the server 108 in FIG. 1) by a user of the electronic device 101, similar to the image stored in the memory 130, the electronic device 101 may analyze the images stored in the cloud server, recognize an object(s) included in the images, and determine a category corresponding to the recognized object(s). The category may for example include a person, a thing, or an animal. The electronic device 101 may determine arrangement information for the recognized object(s) based on the determined category and/or further information on the recognized object(s) and/or the image(s) from which it was recognized, and generate a first image 211 in which the object(s) is arranged based on the determined arrangement information.

The first image 211 may include at least one target object corresponding to multiple categories and a title 215, where the categories and at least one target object may have been determined based on the above-described recognition steps . The at least one target object may include a user object 213 (e.g. an image of the user), a first target object 212, a second target object 214, a third target object 216, and a fourth target object 217. The electronic device 101 may determine each target object based on a generation time of the image including the object, a usage time (e.g. views, shares etc.) of the image including the object, a size of the object, or a shape of the object. The electronic device 101 may also determine the target objects based on the frequency of their categories in stored images such that the target objects may be representative of objects/images of higher interest to the user. The electronic device 101 may include the user object 213 as a background, additionally arrange the first target object 212, the second target object 214, the third target object 216, and the fourth target object 217 on an edge of the user object 213, and arrange the title 215 in an upper center so as to generate the first image 211.

According to an embodiment, the electronic device 101 may select a image /object category to be displayed on a display (e.g., the display module 160 in FIG. 1) based on the number of images/objects for each category, divide (or determine) an object display area in response to the selected category, and gather and display target objects having an identical or a similar category in each divided object display area. Image 211 shows an example having four divided object display areas but the object display areas may be more than four (e.g., five) or less than four (e.g., two or three). The first target object 212 may be related to a first category, the second target object 214 may be related to a second category, the third target object 216 may be related to a third category, and the fourth target object 217 may be related to a fourth category. There may be more than one target object for each category.

The electronic device 101 may display first tag information (#Painting) along with the first target object 212, second tag information (#Dessert) along with the second target object 214, third tag information (#Wine) along with the third target object 216, and fourth tag information (#Lighting) along with the fourth target object 217. The electronic device 101 may analyze tag information corresponding to at least one of the target objects and extract the title 215. Alternatively, the electronic device 101 may determine the title 215 based on the criteria by which the target objects were determined e.g. most viewed images, most common type of images/obj ects. The electronic device 101 may execute a gallery application according to a user request and display an execution screen 210 of the gallery application, which includes the first image 211. The first image 211 may be used as a background image. By virtue of providing the first image 211 as a screen of a gallery application, an efficient approach to representing relevant content of the gallery application (or other application) may be provided, which may improve navigation. Alternatively, background images that are of relevance to a user may be created with fewer user inputs.

The electronic device 101 may recognize one or more objects included in one or more images via suitable image recognition and generate a second image 231. The second image 231 may have at least one object having an identical category (e.g. table light), which is arranged in a spiral shape, and may include a title (Table lights). The electronic device 101 may use the second image 231 as an album cover for an album including images related to table lights. For example, the electronic device 101 may execute a gallery application according to a user request and display an execution screen 230 of the gallery application, which includes the second image 231 and a light image list 233. The second image 231 may be used as an album cover. The light image list 233 may include objects that have been recognized from the stored images and/or images that include the recognized objects. The provision of album covers in this manner provides an improved navigation interface since a user may quickly and easily recognize the content of the album due the customization of the album cover.

The electronic device 101 may generate a third image 251 in which multiple objects that have been recognized from stored images are randomly arranged based on categories of the objects. Tag information corresponding to the categories of the objects may also be displayed. The third image 251 may include first tag information 252 (#My fave Food) corresponding to multiple first target objects having similar or identical categories, second tag information 253 (#Car and #Vintage) corresponding to multiple second target objects, and third tag information 255 (#Lighting) corresponding to multiple third target objects. The electronic device 101 may display two pieces of tag information (e.g., #Car and #Vintage) in response to the multiple second target objects having similar or identical categories, or such objects being commonly found in images together. According to an embodiment, the electronic device 101 determine a background color of the third image 251 based on a color of the one or more target objects and apply the determined background color to the third image 251. The electronic device 101 may execute a gallery application according to a user request and display an execution screen 250 of the gallery application, which includes the third image 251. The third image 251 may be used as a background image. The background colors of the images 211 and 231 may also be determined based on the color of one or more of the target objects included therein.

An electronic device 101 according to an embodiment may include a display 160, a processor 120, and a memory 130, wherein the memory stores instructions that, when executed by the processor, cause the electronic device to recognize objects included in an image, determine categories corresponding to the objects, select a target object to be displayed on the display among the recognized objects, determine arrangement information of the target object, and provide a new image in which the target object is arranged based on arrangement information of the target object.

The instructions, when executed by the processor, may cause the electronic device to determine at least one target object based on at least one of a generation time of the image including the object, a usage time of the image including the object, a size of the object, or a shape of the object.

The instructions, when executed by the processor, may cause the electronic device to group objects having an identical category, select a category based on the number of the grouped objects or the number of images for each category, divide the display into object display areas in response to the selected category, and provide a new image in which the target object is displayed on the divided object display area, based on arrangement information.

The instructions, when executed by the processor, may cause the electronic device to identify a size of a representative object of a specific category among the target objects and adjust the object display area based on the identified size of the representative object.

The instructions, when executed by the processor, may cause the electronic device to extract a title based on tag information of the target objects and generate the new image including the extracted title.

The instructions, when executed by the processor, may cause the electronic device to, in case that the title is extracted, determine whether a person object is included in the target objects and in case that the person object is included in the target objects, arrange the title not to overlap the person object so as to generate a new image.

The instructions, when executed by the processor, may cause the electronic device to, in case that the person object is not included in the target objects, arrange the tile to correspond to a designated position of the display so as to generate a new image.

The instructions, when executed by the processor, may cause the electronic device to determine an arrangement structure of the target objects based on at least one of a category of the target objects, a size of the target objects, a shape of the target objects, a generation time of an image including the target objects, and a usage time of the image including the target objects, and generate a new image in which the target objects are arranged based on the determined arrangement structure.

The electronic device may further include an inertia sensor and the instructions, when executed by the processor, may cause the electronic device to change a display position of a target object included in the new image, based on sensing data acquired from the inertia sensor.

The instructions, when executed by the processor, may cause the electronic device to determine a background color of the new image, based on color information of the target object included in the new image and apply the determined background color to the new image.

The instructions, when executed by the processor, may cause the electronic device to, in case that the target object included in the new image is selected, generate a background image using the selected target object, or provide a function of sharing or duplicate the selected target object and a searching function.

The instructions, when executed by the processor, may cause the electronic device to, in case that there is a request for a background image application corresponding to a size of a display different from the size of the display, reconfigure arrangement of the target object included in the new image and generate a background image.

The instructions, when executed by the processor, may cause the electronic device to edit the new image based on a user input and store the edited new image as a background image.

The instructions, when executed by the processor, may cause the electronic device to select a determined category or select a category having the number of objects within the category equal to or greater than a threshold value.

The instructions, when executed by the processor, may cause the electronic device to generate a new image having a size bigger than the display and change a display position of a target object included in the new image, based on sensing data acquired from the inertia sensor.

The instructions, when executed by the processor, may cause the electronic device to separate the target object and the background included in the new image, apply a motion to the target object based on motion information of the separated target object, process the separated background based on an image processing technology, and use the target object to which the motion has been applied and the processed background to generate a new second image.

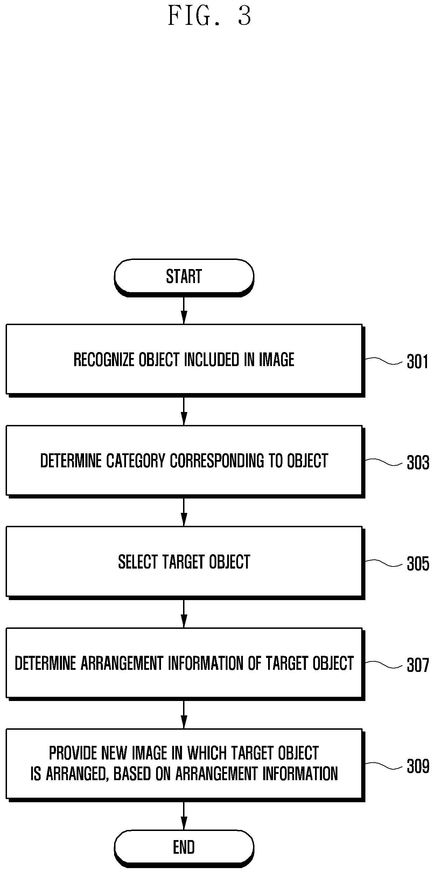

FIG. 3 is a flowchart 300 illustrating an operation method of an electronic device according to an embodiment.

Referring to FIG. 3, in operation 301, a processor (e.g., the processor 120 in FIG. 1) of an electronic device (e.g., the electronic device 101 in FIG. 1) according to an embodiment may recognize an object included in an image. The object(s) may indicate a subject included in or a subject of an image. The processor 120 may analyze images stored in a memory (e.g., the memory 130 in FIG. 1) and recognize one or more objects included in the images. Alternatively or additionally, the processor 120 may analyze images stored in a cloud server (e.g., the server 108 in FIG. 1) by a user and recognize one or more objects included in the images. The analyzed images may also be a subset of stored images, such as images that are included in a particular folder or were generated during a particular time period. According to an embodiment, the processor 120 may recognize an object based on at least one designated image processing technology (e.g., object detection and/or saliency object detection (SOD)).

In operation 303, the processor 120 may determine a category corresponding to the recognized object(s). In one example, the processor 120 may determine categories (or types) of various objects based on an object detection technology. The category may include an upper category, such as a person, a thing, or an animal. Alternatively or additionally, the processor 120 may recognize a face stored in the memory 130 or the server 108, and subdivide (or divide) the upper category of "person" into lower categories, such as the user, friend 1, friend 2, and family 1. For example, the processor 120 may recognize a face of an image stored in the memory 130 or the server 108 and subdivide a lower category. An upper category of "thing" may be divided into lower categories, such as riding (e.g., "bicycle", "car", "motorcycle", "airplane", "bus", "train", "truck", and "boat"), food (e.g., "coffee", "milk", "steak", and "pasta"), and light (e.g., "traffic light", "pendant light", "wall light", "floor light", and "desk light"). One lower category may be further divided into multiple lowest categories. A category of "animal" may be divided into lower categories, such as "bird", "cat", "dog", "horse", "sheep", "cow", "elephant", "bear", and "zebra".

According to an embodiment, the processor 120 may classify a category of the object and then apply a background erase effect to the object. The background erase effect may be to maintain only an object in an image and process the rest as a background to be removed. This may be done for each or a selection of images in which objects have been recognized. For example, in case that one object is recognized in one image, the processor 120 may remove the rest other than the recognized object to remove a background. In case that two (or more) objects are recognized in one image, the processor 120 may remove the rest other than a first object and remove the rest other than a second object. Alternatively, the processor 120 may select only some of the recognized objects (e.g. based on their level of categorization) and erase the remainder of the image include the non-selected recognized objects.

In operation 305, the processor 120 may select (or extract) a target object. The target object may include an object to be displayed on a display (e.g., the display module 160 in FIG. 1) among the recognized objects. For example, the processor 120 may determine the target object based on a generation time (e.g., a recent image) of the image including the object, a usage time (e.g., the number of views or shares) of the image including the object, a size of the object, or a shape of the object. In other examples, the processor 120 may extract, as a target object, an object of which portion (e.g., 50% or more) is not cut off, or an object having a large size. The processor 120 may also or alternatively select a target object based on whether an image including an object is recently captured (or saved) or recently viewed or edited by a user.

In operation 307, the processor 120 may determine arrangement information of the target object(s) that sets out the arrangement of the target objects in a new image. The processor 120 may group objects having an identical or similar category (e.g., the upper category or the lower category) and select a category to be included in a new image, based on the number of the grouped objects or the number of images for each category. In addition, the processor 120 may select a category to be include in a new image, based on a generation time of the image(s) including the object(s), a usage time of the image(s) including the object(s), a size of the object(s), or a shape of the object(s). The processor 120 may determine arrangement information (or an arrangement structure) of the target object(s), based on at least one of a category of the target object(s), a number of categories, a size of the target object(s), a shape of the target object(s), a generation time of image(s) including the target object(s), and a usage time of the image(s) including the target object(s).

For example, in case that it is determined that there are four categories of target objects, the processor 120 may divide a display (e.g., the display module 160 in FIG. 1) into four object display areas and determine which target object will be displayed on each object display area. The object display area is for displaying target objects included in an identical category and there may be one or more target objects included in the object display area. The arrangement information of the target object may include at least one of which object display area to arrange the target object in, whether target objects overlap, or an arrangement direction (or angle) of the target object. The display may also be divided into a predetermined number of object display areas and then an object category allocated to each of the display areas. For example, the four categories having the highest number of target objects may be allocated to the four object display areas. If there are more categories of object than display areas target objects corresponding to some of the categories may not be displayed. Furthermore, one or more target objects representative of a category may be displayed in each object display area. The size of the object display areas may also vary based on the relative number of target objects in each of the categories and/or the size of the target objects in each category or the representative target object(s) of each category.

In operation 309, the processor 120 may provide a new image in which the target object(s) is arranged based on the determined arrangement information. The processor 120 may generate a new image and display the generated new image on the display module 160. For example, the new image may be used for a background image or an album cover, such as a cover or background of an album/folder in which the analyzed images were stored or background for one or more screens of the electronic device. The processor 120 may add a user object including a face of the user as a background and additionally arrange at least one target object having different categories at an edge of the display surrounding the user object. The processor 120 may gather and display at least one target object having an identical or similar category at one object display area. The processor 120 may extract tag information based on the category of the target object included in the object display area and display the tag information on the target object. The processor 120 may extract a title based on the tag information and add the extracted title to the new image.

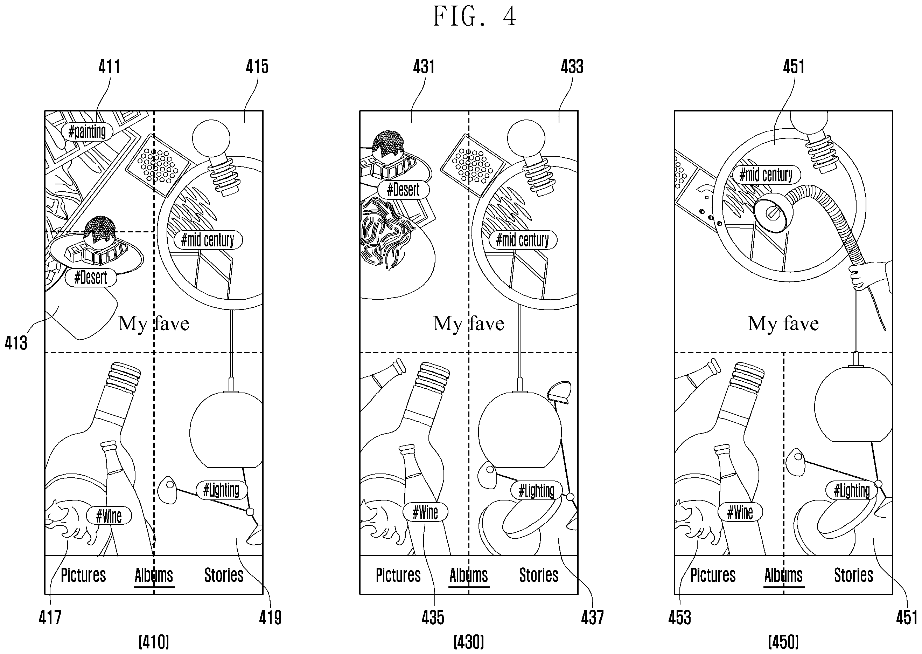

FIG. 4 is a view illustrating an example of dividing an object display area in an electronic device according to an embodiment.

Referring to FIG. 4, a processor (e.g., the processor 120 in FIG. 1) of an electronic device (e.g., the electronic device 101 in FIG. 1) according to an embodiment may analyze all or a subset of images stored in a memory (e.g., the memory 130 in FIG. 1 or cloud-based storage), determine one or more categories one or more object included in the images, and select a predetermined number (e.g., two, three, ..or five) of categories. For example, the processor 120 may select a category based on at least one of the number of images for each category, categories corresponding to the most recently generated (e.g., captured or stored) images, or the order of most used (e.g., viewed, edited, or shared) images. The processor 120 may divide the object display area based on the number of selected categories. For example, in case that two categories are selected, the object display area may be divided into two, and in case that five categories are selected, the object display area may be divided into five. In one example, in case that one category is selected, the processor 120 may determine the entire area of the display module 160 as the object display area.

According to an embodiment, the processor 120 may identify a size of a representative object of a specific category and adjust the object display area based on the size of the representative object. For example, the processor 120 may generate four subject display areas 431, 433, 435, and 437, such as a second user interface 430. In case that the size of the representative object is equal to or lower than a first reference value, the processor 120 may increase the object display area to five to generate five object display areas 411, 413, 415, 417, and 419 like a first user interface 410. In case that the size of the representative object is equal to or greater than a second reference value, the processor 120 may reduce the object display area to three to generate three object display areas 451, 453, and 455 like a third user interface 450. The second reference value may have a value greater than the first reference value.

According to an embodiment, the processor 120 may divide the object display area by determining a reference point for each category rather than dividing the object display area into square screens. Alternatively, the processor 120 may divide the object display area by using a category layout template. The category layout template may be generated in advance by appropriately dividing the object display area based on a category. Objects representing categories may also overlap one another and/or extend outside of their corresponding object display area. For example, as shown in the first user interface 410, some of the objects in object display areas 411, 412, and 415 overlap with each other. By virtue of such an arrangement an increased number of objects may be displayed and objects of varying sizes may be more easily displayed. With respect to image album covers etc., such an approach may allow for increased information on the content of the album to be provided to the user by virtue of the generated image.

Providing albums covers in the manners described above and below also provides an efficient approach to user navigation of stored image since the album covers presented to the user provide an accurate representation of the stored images and also will be of increased relevance to the user, such that the user will be required to performed fewer navigation actions to access images of relevance to them.

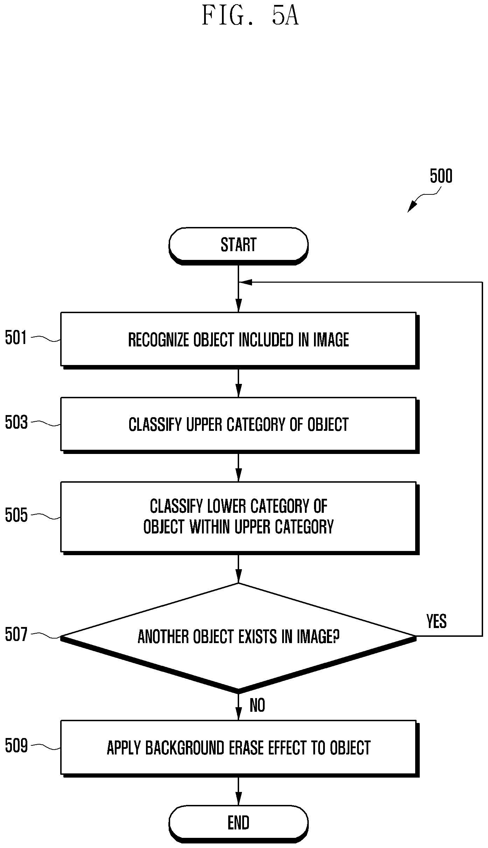

FIG. 5A is a flowchart 500 illustrating a method of an electronic device for recognizing an object included in an image according to an embodiment. FIG. 5A may correspond to a detailed description of operations 301 and 303 in FIG. 3.

Referring to FIG. 5A, in operation 501, a processor (e.g., the processor 120 in FIG. 1) of an electronic device (e.g., the electronic device 101 in FIG. 1) according to an embodiment may recognize an object included in an image. The object may indicate or represent a subject of an image and one image may include one or more objects. The processor 120 may recognize at least one object from the image. The processor 120 may analyze all or a subset of images stored in a memory (e.g., the memory 130 in FIG. 1) or a cloud server (e.g., the server 108 in FIG. 1) and recognize objects included in the images.

In operation 503, the processor 120 may classify an upper category of the object from the analyzed image. In some examples, the processor 120 may determine categories (or types) of various objects based on an object detection technology. The upper category may include at least one of a person, a thing, or an animal. The processor 120 may classify (or determine) whether the recognized object is a person, a thing, or an animal.

In operation 505, the processor 120 may classify a lower category of the object within the upper category. For example, the processor 120 may recognize a face of an image stored in the memory 130 or the server 108 and in case that the upper category corresponds to "person", subdivide a lower category based on the face. Alternatively, in case that the upper category corresponds to "thing", the lower category of the object may include "car", "food", or "lighting". In case that the upper category corresponds to "animal", the lower category of the object may include "dog" or "cat" for example.

In operation 507, the processor 120 may determine whether there is another object in the image. One image may include one object or multiple objects. The processor 120 may perform operation 501 to operation 507 with respect to one image and may return to operation 501 in case that there is another object in the image. The processor 120 may perform operation 501 to operation 507 with respect to one image and may perform operation 509 in case that there is no other object in the image.

In operation 509, in case that there is no other object in the image, the processor 120 may apply a background erase effect on the object. The background erase effect may be to maintain only the recognized object(s) in an image and process the rest as a background to be removed so as to allow the object to be easily included in other images/screens. In some examples, even though multiple objects are recognized in an image, only a single object is selected and the remaining objects and backgrounds erased.

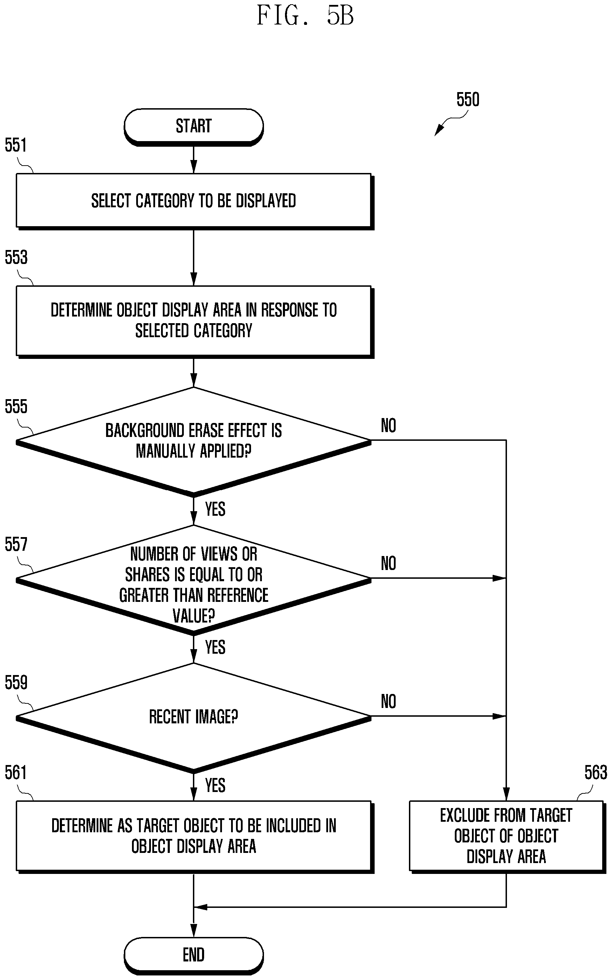

FIG. 5B is a flowchart 550 illustrating a method of an electronic device for determining a target object (i.e. determining a representative objection of a category) according to an embodiment.

Referring to FIG. 5B, in operation 551, a processor (e.g., the processor 120 in FIG. 1) of an electronic device (e.g., the electronic device 101 in FIG. 1) according to an embodiment may select a category to display. For example, the processor 120 may select a category based on at least one of the number of images for each category, most recently generated (e.g., captured or stored) images, or the order of most used (e.g., viewed, edited, or shared) images. The processor 120 may select the predetermined number (e.g., two, three,..., or five) of categories. The categories of images may be determined based on the objects that have been recognized and categorized in the images.

In operation 553, the processor 120 may divide the object display area based on the selected categories. The number of selected categories may be predetermined, or the processor 120 may select a category in which the number of objects in the category is equal to or greater than a threshold value. In case that there are not enough categories that satisfy a predetermined condition, the processor 120 may determine the minimum number of categories. For example, in case that the predetermined number of categories is four, and there are three categories which fulfil the requirements to be selected, the processor 120 may determine three, and in case that there are ten categories, the processor 120 may determine only four according to priority. In some examples, in case that one category is selected, the processor 120 may determine the entire area of the display module 160 as a single object display area.

The processor 120 may perform operation 555 to operation 563 with respect to the image(s) included in the selected category and determine (or select) a target object. Operation 555 to operation 563 may be repeatedly performed on the images included in the selected category until a target image or a predetermined number of target images are determined. However, the criteria for repeating operation 555 to operation 563 may take any form, such as determining target objects that fulfil a certain size criteria for example.

In operation 555, the processor 120 may determine whether a manual background erase effect is applied. The user may directly apply the background erase effect on the object to acquire an object that the user wants from the image. In case that the background erase effect is manually applied on the image, the user may have a high preference for the image. In case that the user applies the background erase effect manually with respect to the image, the processor 120 may perform operation 557, and in case that the user does not apply the background erase effect manually with respect to the image, the processor 120 may perform operation 563.

In case that the user applies the background erase effect manually, in operation 557, the processor 120 may determine whether the number of views or shares of the associated image is equal to or greater than a reference value. The processor 120 may monitor a usage history of the user. For example, the processor 120 may accumulate at least one usage history of the number (or time) of views, the number of edits, or the number of shares of the image for a designated period (e.g., 7 days, 39 days, or 3 months). In case that the number of views or shares is equal to or greater than a reference value, the preference of the user for the image may be high. In case that the number of views or shares is equal to or greater than a reference value, the processor 120 may perform operation 559 and in case that the number of views or shares is less than a reference value, the processor may perform operation 563.

In case that the number of views or shares is equal to or greater than a reference value, in operation 559, the processor 120 may determine whether the image is a recent image. The user may have a high preference for an image recently (e.g., within 7 days, 10 days, or 1 month) captured (or generated) or acquired (e.g., downloaded). In case that the image is a recent image, the processor 120 may perform operation 561, and in case that the image is not a recent image, the processor 120 may perform operation 563.

In case that the image is a recent image, in operation 561, the processor 120 may determine a target object to be included in the object display area. For example, the processor 120 may determine, as the target object, an object included in an image to which the background erase effect is applied, or an image which the user frequently watch or of which the number of edits or shares is high. Alternatively, the processor 120 may determine, as the target object, an object of an image in which the object is clearly distinguishable from the background. In some examples, only some of steps 555, 557, and 559 may be performed to determine a target image.

In case that the image corresponds to at least one of cases that the user has not manually applied the background erase effect, the image has fewer views or shares than a reference value, or the image is not a recent image, in operation 563, the processor 120 may exclude the object of the image from the target object of the object display area. The selected category may include multiple images, and the multiple images may include multiple objects and the operations 555 to operation 563 may be performed on more than one or all of the multiple images and multiple objects. By virtue of the process of 550, the processor 120 can select the target object to be included in the object display area among the multiple objects that reflects the preference of the user. Accordingly, the processor 120 may exclude an object of which user preference is low from the target object.

According to an embodiment, the processor 120 may perform operation 555 to operation 563 with respect to at least one object display area to select a target object to be included in one object display area. For example, in case that there are four object display areas, the processor 120 may perform operation 555 to operation 563 with respect to a first object display area to select a target object to be included in the first object display area, perform operation 555 to operation 563 with respect to a second object display area to select a target object to be included in the second object display area, perform operation 555 to operation 563 with respect to a third object display area to select a target object to be included in the third object display area, and perform operation 555 to operation 563 with respect to a fourth object display area to select a target object to be included in the fourth object display area.

According to an embodiment, the processor 120 may arrange a different target object depending on a category. For example, in case that recognition of an object from an image is not possible, the processor 120 may randomly arrange target objects (3 to 6 pieces) in a row or in a spiral form. In case that recognition of an object from an image is possible, the processor 120 may arrange objects included in a person category in a radial form, objects included in an animal category in a spiral form, and objects included in a thing category in a spiral form or random or predefined arrangement.

According to an embodiment, the processor 120 may identify a size of a representative object of a specific category and adjust the object display area based on the size of the representative object. For example, multiple target objects may be included in one object display area, and the processor 120 may identify one target object as a representative object from among the multiple target objects. The processor 120 may identify a representative object (e.g., an object of interest) by using a saliency object detection technology. For example, the processor 120 may increase the object display area in case that a size of the representative object is equal to or more than a first reference value, and reduce the object display area in case that the size of the representative object is equal to or less than a second reference value. The second reference value may have a value greater than the first reference value. That is, the processor 120 may adjust a divided object display area based on the size of the representative object in operation 553. Alternatively, the representative object may be scaled according to the size of the corresponding object display area.

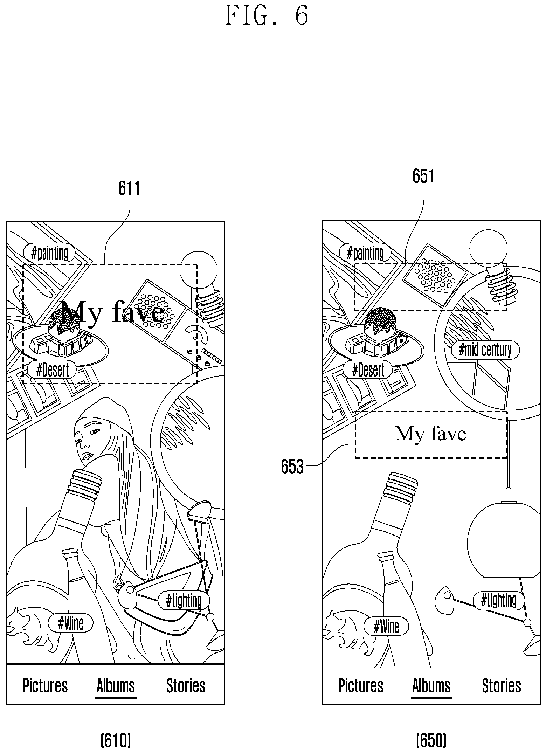

FIG. 6 is a view illustrating an example of providing a new image including a title in an electronic device according to an embodiment.

Referring to FIG. 6, a processor (e.g., the processor 120 in FIG. 1) of an electronic device (e.g., the electronic device 101 in FIG. 1) according to an embodiment may extract a title based on tag information of an object and generate a new image including the extracted title. The processor 120 may extract a title based on tag information of an object included in the object display area. The tag information is extracted based on a category of the object and may include text. The title may be extracted based on one or more of the objects included in multiple object display areas.

In case that the title is extracted, the processor 120 may determine whether a person object is included in target objects, and in case that a person object is included, the processor may generate a new image like a first user interface 610. For example, the processor 120 may determine whether a person object is to be included in a background. The first user interface 610 may correspond to an image including a title 611 not to overlap the person object. In case that a person object is not included in the background, the processor 120 may generate a new image like a second user interface 630. The second user interface 630 may correspond to an image in which a title is arranged at an upper end 651 or a center 653 on a display (e.g., the display module 160 in FIG. 1).

According to an embodiment, the processor 120 may allow the title to be included in a designated position, such as the upper end or the center, of the display module 160 for each category of a target object. The processor 120 may determine a title position based on a result of analyzing a position of a target object displayed on the background or a target object position for each category. In case that extraction of a title is not possible, the processor 120 may randomly select a similar word like "My favorite" or cause a title not to be included.

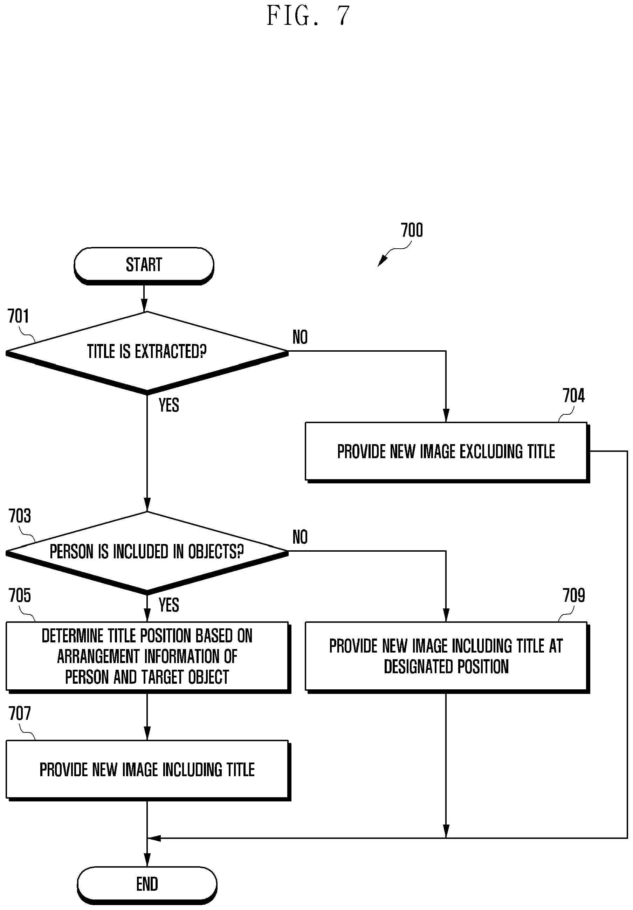

FIG. 7 is a flowchart 700 illustrating a method of an electronic device for generating an image including a title according to an embodiment. FIG. 7 illustrates operations which may be included in operation 307 in FIG. 3 and operated.

Referring to FIG. 7, in operation 701, a processor (e.g., the processor 120 in FIG. 1) of an electronic device (e.g., the electronic device 101 in FIG. 1) may determine whether a title is extracted. The processor 120 may extract a title based on tag information of a target object included in the object display area. The tag information is extracted based on a category of the target object and may include text. In case that the title is extracted, the processor 120 may perform operation 703, and in case that the title is not extracted, the processor 120 may perform operation 704.

In case that the title is not extracted, in operation 704, the processor 120 may provide a new image excluding the title. The processor 120 may generate a new image including multiple target objects and tag information and not including the title, and display the generated new image on a display (e.g., the display module 160 in FIG. 1).

In case that the title is extracted, in operation 703, the processor 120 may determine whether a person is included in target objects. For example, the processor 120 may determine whether a person object is included in a background. In case that a person is included in target objects, the processor 120 may perform operation 705, and in case that a person is not included in target objects, the processor 120 may perform operation 709.

In case that a person is not included in target objects, in operation 708, the processor 120 may provide a new image including a title at a designated position. The processor 120 may arrange the title at the upper end or the center of the display module 160, generate a new image including multiple target objects and tag information, and display the generated new image on the display module 160. According to an embodiment, the processor 120 may correct a content or display position of the title based on a user input.

In case that a person is included in the target objects, in operation 705, the processor 120 may determine a position of the title based on arrangement information of the person (or person object) and target objects. For example, the processor 120 may determine a position of the title not to overlap the person object. Furthermore, the processor 120 may determine a position of the title not to overlap the tag information of the target objects.

In operation 707, the processor 120 may provide a new image including the title. The processor 120 may generate a new image and display the generated new image on the display module 160. For example, the new image may be used for a background image or an album cover. According to an embodiment, the processor 120 may correct a content or display position of the title based on a user input.

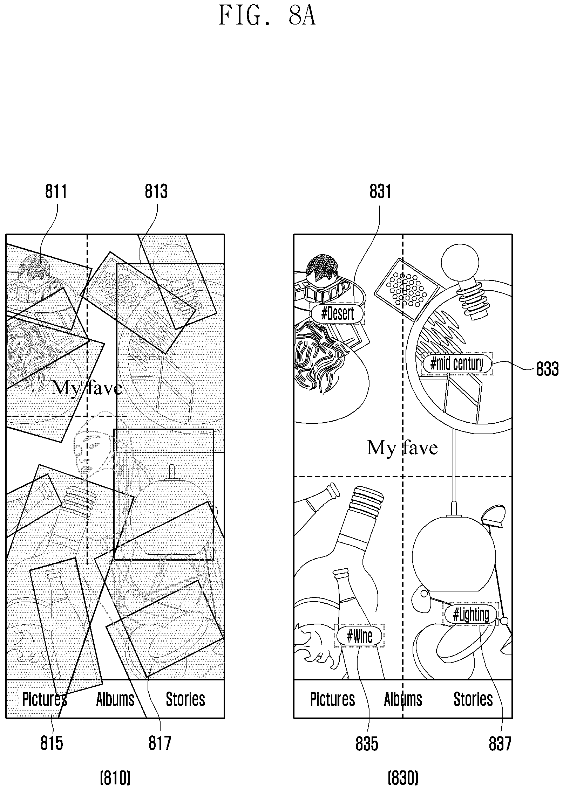

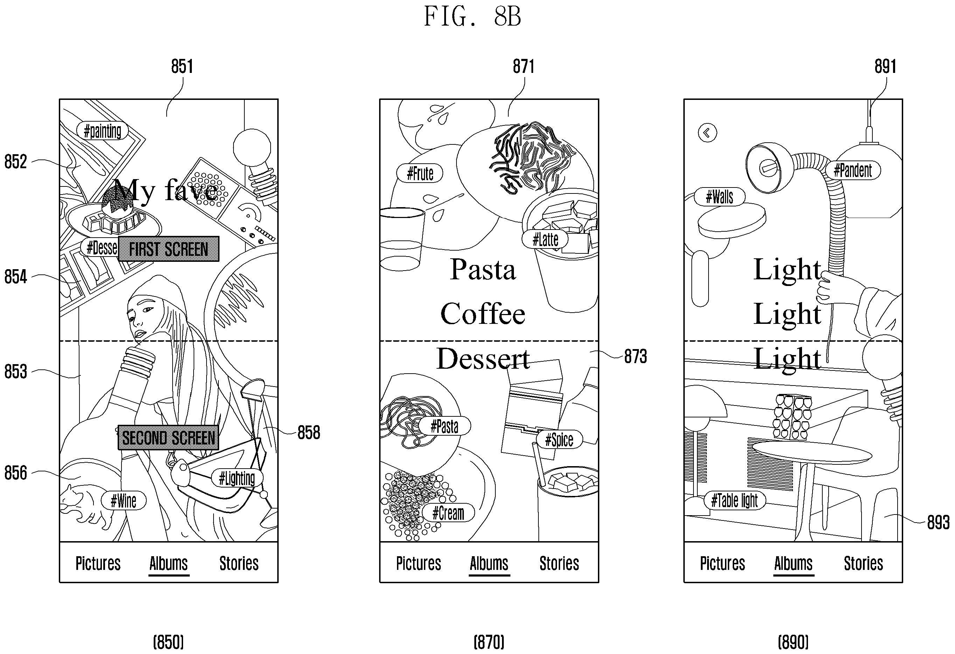

FIGS. 8A and 8B are views illustrating an example of arranging an object in an object display area in an electronic device according to an embodiment.

Referring to FIG. 8A, a processor (e.g., the processor 120 in FIG. 1) of an electronic device (e.g., the electronic device 101 in FIG. 1) may arrange multiple target objects on each object display area and generate a new image. A first user interface 810 may correspond to a case in which two target objects corresponding to a food category are arranged on a first object display area 811, two target objects corresponding to a mid-century category are arranged on a second object display area 813, three target objects corresponding to a wine category are arranged on a third object display area 815, and three target objects corresponding to a lighting category are arranged on a fourth object display area 817.

The multiple target objects included in each object display area may overlap each other, and display directions (e.g., a clockwise direction) or display angles (e.g., between 0 to 90 degrees) of the multiple objects may be different from each other. In case that the target objects included in the object display area include a person, the processor 120 may arrange the target object so that the person's head, eyes, nose, and mouth are not cut out of the display module 160. Alternatively, within the same category, a target object separated from the background may be arranged not to overlap other target objects, but an entire rectangular image including a background area (e.g., a rectangular image including the object) may overlap a rectangular image including another target object, for example, by 10 to 50% of the area. Different rotation angles may be applied to each image within a predefined angle range within the same category, or the same rotation angle may be applied to some images. A maximum number of multiple target objects included in each object display area may be designated.

According to an embodiment, the processor 120 may determine a display layer between target objects included in each object display area and determine whether to arrange an object above or below tag information. For example, the processor 120 may differently apply a display layer depending on that an arrangement position is an upper end or lower end of a display (e.g., the display module 160 in FIG. 1). With respect to a target object to be arranged at the upper end of the display module 160, the processor 120 may arrange the target object above a text area, based on that there is an image adjacent to the text area and whether to overlap the text area. With respect to a target object to be arranged at the lower end of the display module 160, the processor 120 may arrange the target object below the text area, based on a size of an object and whether to overlap the text area. Here, the text area may indicate tag information or a title.

The processor 120 may display a second user interface 830 including a new image (e.g., a background image) on the display module 160. The second user interface 830 may correspond to a case in which first tag information 831 corresponding to a food category is arranged on a first object display area, second tag information 833 corresponding to a mid-century category is arranged on a second object display area, third tag information 835 corresponding to a wine category is arranged on a third object display area, and fourth tag information 837 corresponding to a lighting category is arranged on a fourth object display area. The tag information may be arranged only within the object display area and not at the edge of the display module 160. The processor 120 may arrange the tag information not to overlap the title.

Referring to FIG. 8B, the processor 120 may generate a new image in which an object is arranged by dividing the display module 160 into two object display areas. The processor 120 may display a third user interface 850 including the new image. For example, the third user interface 850 may correspond to a case in which multiple first target objects corresponding to a first detailed category 852 and multiple second target object corresponding to a second detailed category 854 are arranged on a first object display area 851 which corresponds to the upper end of the display module 160, and multiple third target objects corresponding to a third detailed category 856 and multiple fourth target object corresponding to a fourth detailed category 858 are arranged on a second object display area 853 which corresponds to the lower end of the display module 160. The processor 120 may arrange target objects corresponding to different detailed categories on one object display area.

The processor 120 may display a fourth user interface 870 including the new image. For example, the fourth user interface 870 may correspond to a case in which multiple first target objects corresponding to a first detailed category (e.g., fruit) and multiple second target object corresponding to a second detailed category (e.g., latte) are arranged on a first object display area 871 which corresponds to the upper end of the display module 160, and multiple third target objects corresponding to a third detailed category (e.g., pasta), multiple fourth target objects corresponding to a fourth detailed category (e.g., cream), and multiple fifth target objects corresponding a fifth detailed category (e.g., spice) are arranged on a second object display area 873 which corresponds to the lower end of the display module 160.

The processor 120 may display a fifth user interface 870 including the new image. For example, the fifth user interface 870 may correspond to a case in which multiple first target objects corresponding to a first detailed category (e.g., walls) and multiple second target object corresponding to a second detailed category (e.g., pendant) are arranged on a first object display area 891 which corresponds to the upper end of the display module 160, and multiple third target objects corresponding to a third detailed category (e.g., table light) are arranged on a second object display area 893 which corresponds to the lower end of the display module 160.

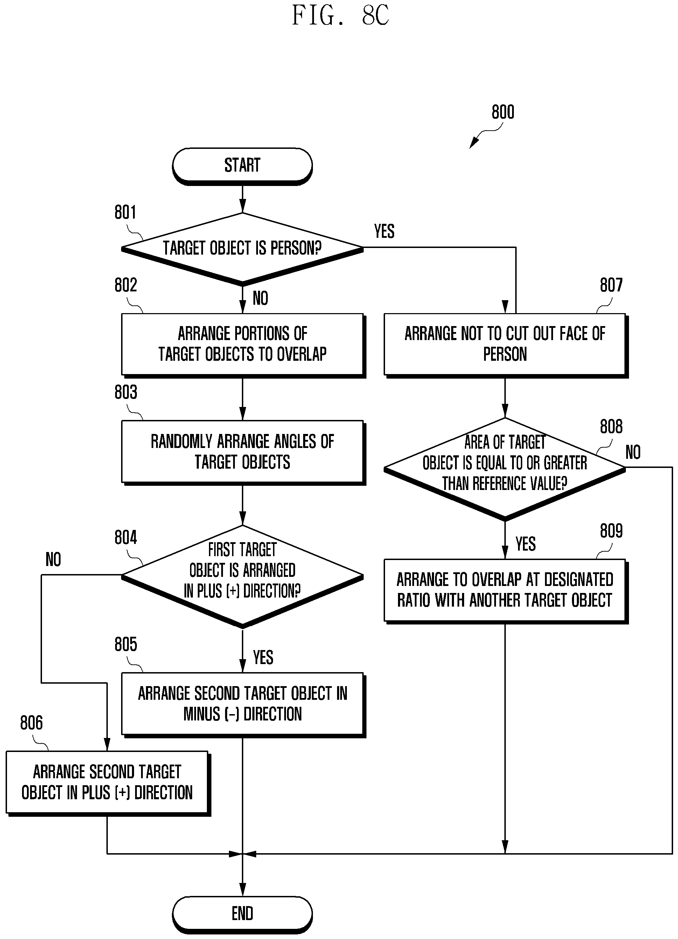

FIG. 8C is a flowchart 800 illustrating a method of an electronic device for arranging a target object according to an embodiment.

Referring to FIG. 8C, in operation 801, a processor (e.g., the processor 120 in FIG. 1) of an electronic device (e.g., the electronic device 101 in FIG. 1) may determine whether a target object is a person. The processor 120 may determine arrangement information (or structure) of an object based on a category of a target object. In case that a target object is a person, the processor 120 may perform operation 807, and in case that a target object is not a person, the processor 120 may perform operation 802.

In case that a target object is not a person, in operation 802, the processor 120 may arrange a portion of the target objects to be overlapped. In case that multiple target objects are arranged on one object display area, the processor 120 may arrange different objects so that some of the different objects overlap (e.g., 10 to 50%).

In operation 803, the processor 120 may arrange a target object to have a random angle. The processor 120 may arrange a target object to have a random angle between 0 to 90 degrees.

In operation 804, the processor 120 may determine whether a first target object is arranged in a plus (+) direction (i.e. in a higher layer). The processor 120 may perform operation 801 to operation 809 with respect to one object display area to determine arrangement information of a target object to be included in one object display area. For example, in case that two target objects are included in one object display area and the first object is arranged in the plus (+) direction, the processor 120 may perform operation 805, and in case that the first object is arranged in a minus (-) direction (i.e. in a lower layer), the processor 120 may perform operation 806. According to an embodiment, in case that one target object is included in one object display area, operation 805 and operation 806 may be omitted.

In case that the first object is arranged in the plus (+) direction, in operation 805, the processor 120 may arrange a second target object in the minus (-) direction. The processor 120 may arrange the second target object in a direction opposite to the arrangement direction of the first target object.

In case that the first object is not arranged in the plus (+) direction (e.g., in case that the first object is arranged in the minus (-) direction), in operation 806, the processor 120 may arrange the second target object in the plus (+) direction. The processor 120 may arrange the second target object in a direction opposite to the arrangement direction of the first target obj ect.

In case that a target object is a person, in operation 807, the processor 120 may arrange the person so that the face of the person is not cut out. In case that the target object is a person, the processor 120 may arrange a person object so that the person's head, eyes, nose, and mouth are all included.

In operation 808, the processor 120 may determine whether an area (or size) of a target object is equal to or greater than a reference value. In case that the area of the target object is equal to or greater than the reference value, the processor 120 may perform operation 809, and in case that the area of the target object is less than the reference value, the processor 120 may end operations.

In case that the area of the target object is equal to or greater than the reference value, in operation 809, the processor 120 may arrange the target object to overlap another target object by a determined ratio (e.g., 10 to 50%). According to an embodiment, the processor 120 may arrange target objects separated from the background not to be overlapped within the same category or arrange entire rectangular images included in the background to overlap with each other. The processor 120 may apply different rotation angles to respective objects within a predefined angle range within the same category, or the same rotation angle some objects.

According to an embodiment, the processor 120 may arrange a different target object depending on a category. For example, in case that recognition of an object from an image is not possible, the processor 120 may randomly arrange target objects (3 to 6 pieces) in a row or in a spiral form. In case that recognition of an object from an image is possible, the processor 120 may arrange objects included in a person category in a radial form, objects included in an animal category in a spiral form, and objects included in a thing category in a spiral form or random/predefined arrangement.

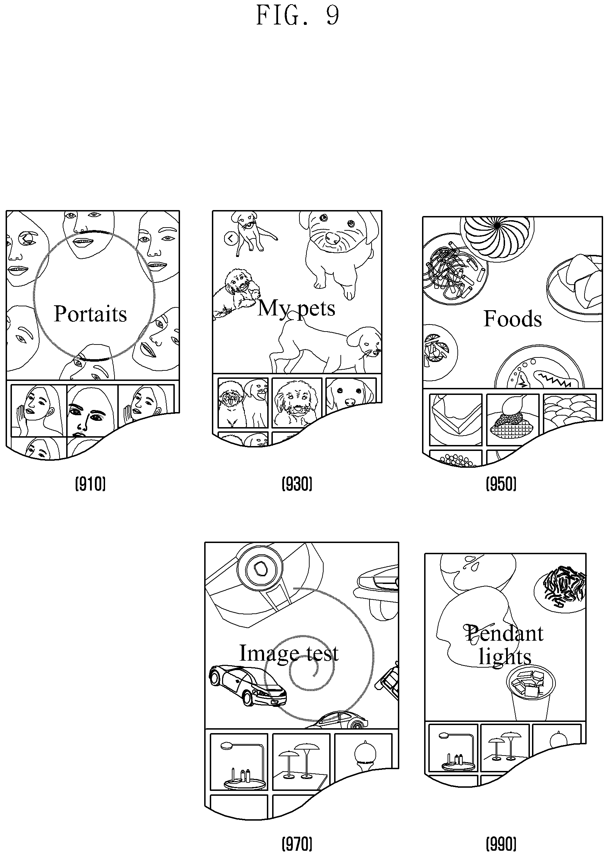

FIG. 9 is a view illustrating an example of determining an arrangement structure of an object in an electronic device according to an embodiment.

Referring to FIG. 9, a processor (e.g., the processor 120 in FIG. 1) of an electronic device (e.g., the electronic device 101 in FIG. 1) may determine an arrangement structure of target objects based on categories of the target objects and generate a new image in which the target object areas are arranged based on the determined arrangement structure. Here, the new image may indicate an album cover. For example, a first album cover 910 may indicate a case in which, in case that a category of a target object is "person", multiple person objects are arranged in a spiral form. A second album cover 930 may indicate a case in which, in case that a category of a target object is "animal", multiple animal objects are arranged in a spiral form. A third album cover 950 may indicate a case in which, in case that a category of a target object is "food", multiple food objects are arranged in a spiral form. A fourth album cover 970 may indicate a case in which, in case that a category of a target object is "car", multiple car objects are arranged in a spiral form. A fifth album cover 990 may indicate a case in which, in case that a category of a target object is "dessert", multiple dessert objects are randomly arranged.

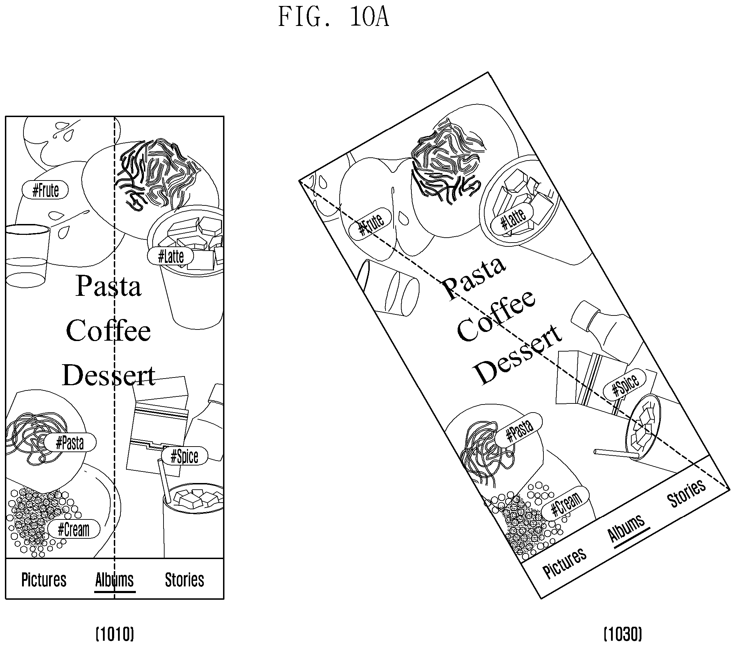

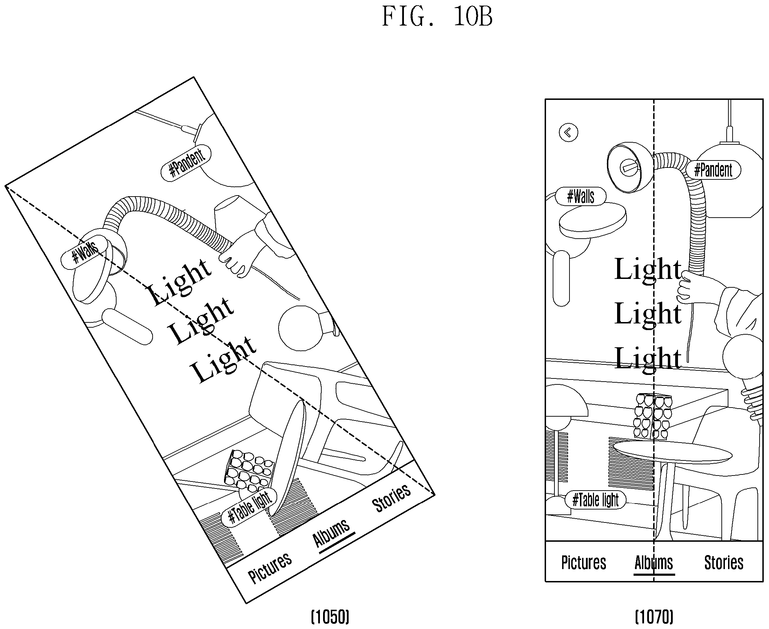

FIGS. 10A and 10B are views illustrating an example of changing a display position of an object in an electronic device according to an embodiment.

Referring to FIG. 10A, a processor (e.g., the processor 120 in FIG. 1) of an electronic device (e.g., the electronic device 101 in FIG. 1 may change a display position of an object included in a new image (e.g., a background image) based on sensing data acquired from an inertia sensor (e.g., the sensor module 176 in FIG. 1). The inertia sensor may include an acceleration sensor or a gyro sensor. For example, in case that the user holds the electronic device 101 with two short lateral sides parallel to the user's torso, the processor 120 may display a first user interface 1010 on a display (e.g., the display module 160 in FIG. 1). While displaying the first user interface 1010, in case that the sensing data (e.g., a rotation value or movement value) acquired from the inertia sensor is changed, the processor 120 may display a second user interface 1030. The second user interface 1030 may be displayed in case that the user holds and moves the electronic device 101 to the left. Comparing the second user interface 1030 with the first user interface 1010, it may be seen that a display position of an object is tilted to the left.

Referring to FIG. 10B, in case that the user holds the electronic device 101 with two short lateral sides tilted to the left, the processor 120 may display a third user interface 1050 on the display module 160. While displaying the third user interface 1050, in case that the sensing data acquired from the inertia sensor is changed, the processor 120 may display a fourth user interface 1070. The fourth user interface 1070 may be displayed in case that the user holds and moves the electronic device 101 to the right. Comparing the fourth user interface 1070 with the third user interface 1010, it may be seen that a display position of an object is tilted to the right. This provides a dynamic background or albums covers that reflects the current state of the electronic device and also provides a more engaging user interface.

The processor 120 may adjust a tilt of a target object differently by reflecting a speed for rotating (or moving) the electronic device 101. For example, in case that the user rotates the electronic device 101 at a rotation speed faster than a reference value, the processor 120 may change a tilt of the display position of the target object to be 50 degrees or greater, and in case that the user rotates the electronic device 101 at a rotation speed slower than a reference value, the processor 120 may change a tilt of the display position of the target object to be 30 degrees or greater.

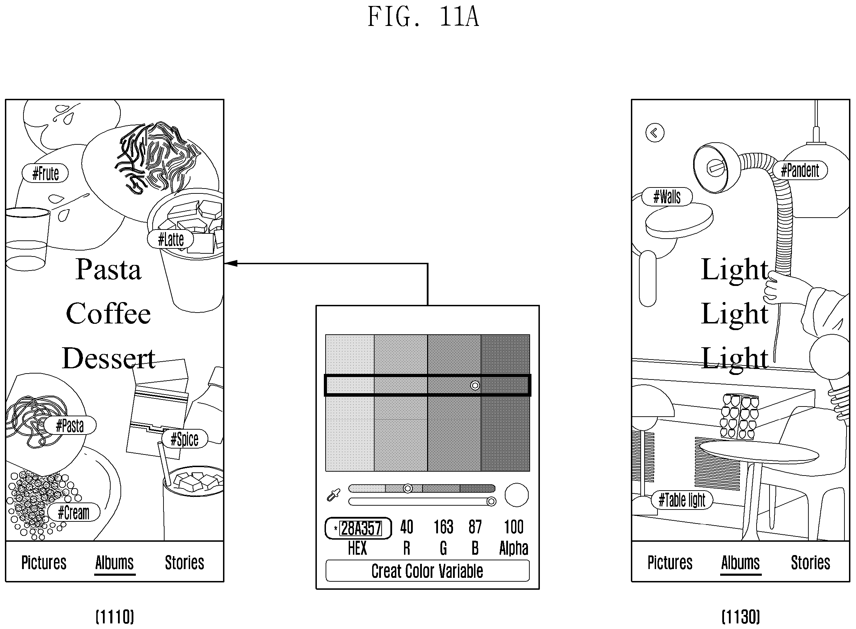

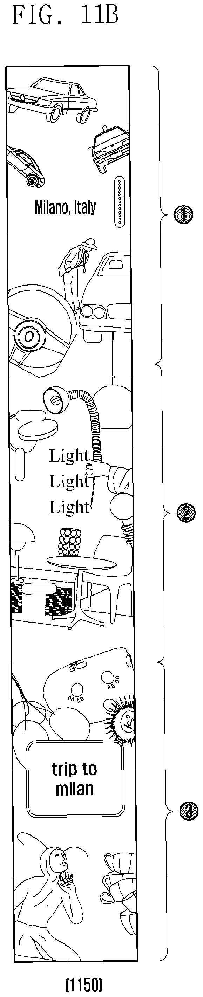

FIGS. 11A and 11B are views illustrating an example of applying a background color to an image in an electronic device according to an embodiment.

Referring to FIG. 11A, a processor (e.g., the processor 120 in FIG. 1) of an electronic device (e.g., the electronic device 101 in FIG. 1) may determine a background color of a new image (e.g., a background image) based on color information of a target object included in the new image. The processor 120 may determine a color with a small difference in the color distribution of the entire object as the background color. For example, the processor 120 may apply the background color within the color spectrum that does not overlap the color of the target object and provide a first user interface 1110 or a third user interface 1130. The first user interface 1110 may have green as the background color based on the color (e.g., pink, brown, white, black, or the like) of the target object. The second user interface 1130 may have gray as the background color based on the color (e.g., orange, white, black, or the like) of the target object. According to an embodiment, in case that a background object of the new image corresponds to one of cases with a high frequency of access, a most recently captured image, or exposure information from social network services (e.g., images that gets "like button"), the processor 120 may not apply the background color. In a case where the object is not frequently used, the background color may be a dark color.

Referring to FIG. 11B, the processor 120 may splice multiple background images together to be scrollable such only part of the image is displayed at any one time. The processor 120 may display a scrollable third user interface 1150. The processor 120 may configure a background color of a background image, which was stored a long time ago or is infrequently accessed, to be dark as shown in (3). The third user interface 1150 may correspond to a case in which a background color of a background image arranged at the upper end is configured to be brightened as shown in ① or have a bright color, and as scrolled down to the lower end, a background image arranged at the lower end is configured to be darkened as shown in (2) or have black and white.

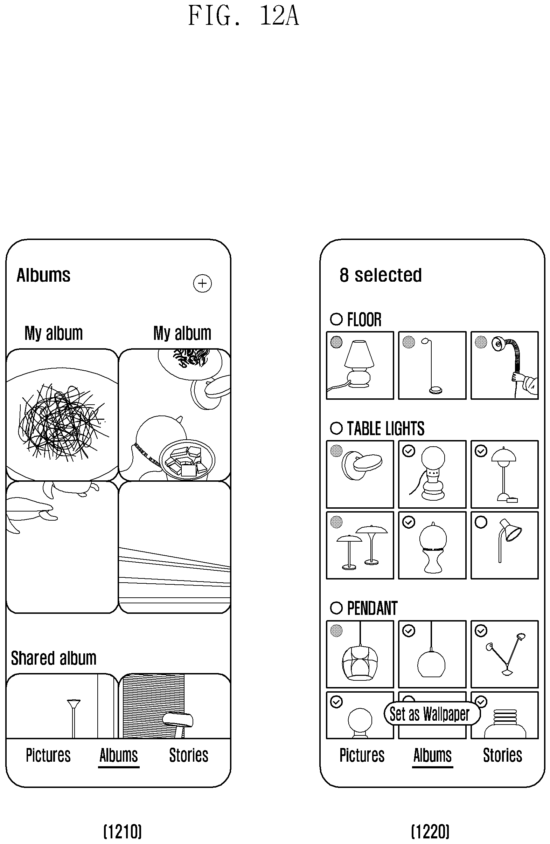

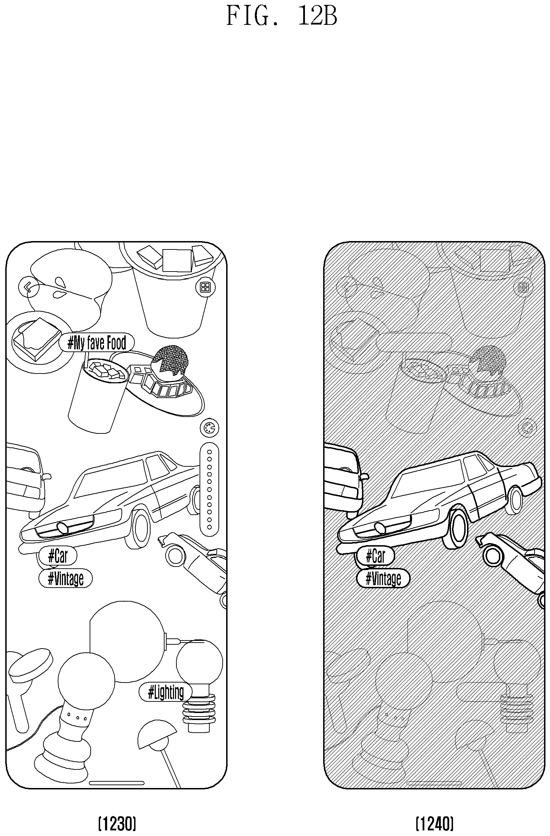

FIGS. 12A and 12B are views illustrating an example of utilizing a background image in an electronic device according to an embodiment.

Referring to FIG. 12A, a processor (e.g., the processor 120 in FIG. 1) of an electronic device (e.g., the electronic device 101 in FIG. 1) according to an embodiment may display a first user interface 1210 or a second user interface 1220 for generating a background image on an execution screen of a gallery application. The first user interface 1210 may correspond to a case in which objects are divided into multiple categories. The second user interface 1220 may correspond to a case in which objects corresponding to one category are divided into detailed categories. The second user interface 1220 may include an image including an object in a grid form. In some examples the various objects may represent albums (i.e. form an album cover) that contain images including objection of the same category as the representative obj ect.

Referring to FIG. 12B, the processor 120 may display a third user interface 1230 including a background image arranged based on a category of a target object. The third user interface 1230 may include a background image including multiple first target objects corresponding to a first category (e.g., My fave Food), multiple second target objects corresponding to a second category (e.g., Car or Vintage), and multiple third target objects corresponding to a third category (e.g., Lighting). In case that one target object (e.g., a car) is selected (e.g., a long press) from the third interface 1230, the processor 120 may display a fourth user interface 1240. The fourth user interface 1240 may correspond to a page for generating a background image using the selected target object or sharing or duplicating the selected target object. When the target object is selected, the processor 120 may provide a searching function or a search result acquired by searching with keywords for the target object on a web page. The processor 120 may display the selected target object to be distinguished from an unselected target object. The processor 120 may shade the unselected target object.

The searching and sharing functionality is not limited to the screens illustrated in Figure 12B but may be applied to all screens/backgrounds considered in this disclosure. For example, any image displayed in the background on as an album cover may be selected as set out with respect to Figure 12B and a search or other function (e.g. sharing) performed. Such an approach provides an efficient interface for a user to perform functions on a displayed image/obj ect.

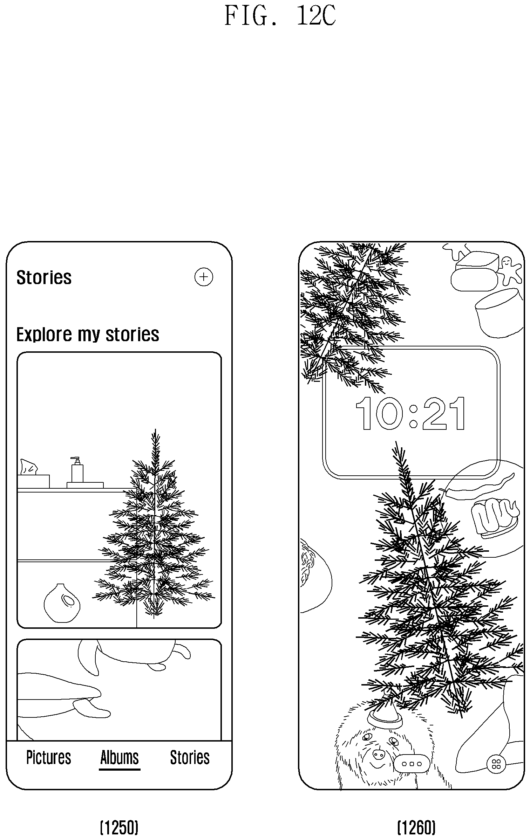

Referring to FIG. 12C, the processor 120 may provide a fifth user interface 1250 by grouping images stored in a memory (e.g., the memory 130 in FIG. 1) into similar stories (or categories) or similar position information and optionally providing a representative image of the group. In case that a menu for generating a background image is selected from the fifth user interface 1250, the processor 120 may generate a background image based on the grouped images. A sixth user interface 1260 may include a background image generated based on the grouped images.

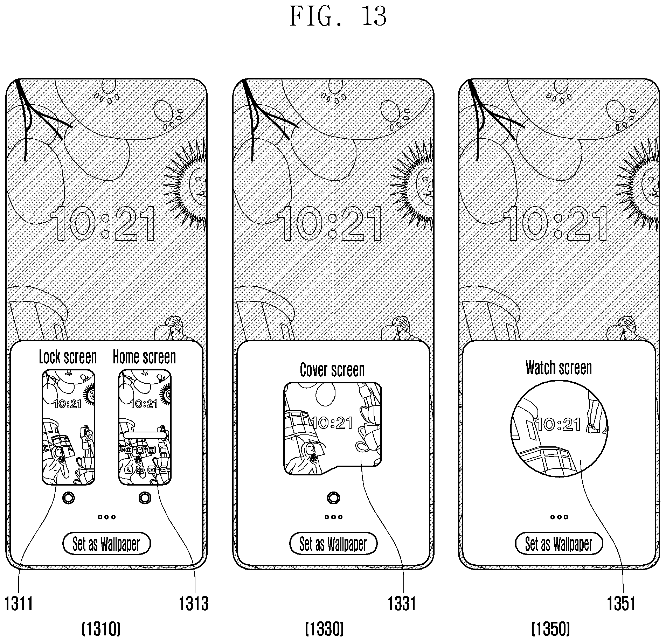

FIG. 13 is a view illustrating an example of reconfiguring an image according to a size of a display in an electronic device according to an embodiment.

Referring to FIG. 13, a processor (e.g., the processor 120 in FIG. 1) of an electronic device (e.g., the electronic device 101 in FIG. 1) according to an embodiment may provide a first user interface 1310 for selecting whether to provide the new image (e.g., the background image) generated by FIG. 3 to a lock screen 1311 or a home screen 1313. The user may select, through the first user interface 1310, whether to apply the generated image to one of the lock screen 1311 or the home screen 1313, or all of the lock screen 1311 or the home screen 1313.

The electronic device 101 may include two displays having different sizes. For example, the electronic device 101 may include a first display and a second display smaller than the first display. The processor 120 may provide a second user interface 1330 for generating a background image based on the first display and applying the generated background image 1331 to the second display. The user may configure the background image of the first display and the second display through the second user interface 1330. The processor 120 may reconfigure the background image generated based on the first display and apply same as the background image 1331 to the second display. The reconfiguring of the background image may indicate not simply cutting, extending, or reducing the background image to fit a size of the second display but generating a new background image corresponding to the size of the second display. The background image (e.g., a home screen 1313 image) applied to the first display and the background image (e.g., the background image 1331) applied to the second display are generated by using the same object but may have different arrangement information.

The processor 120 may provide a third user interface 1350 for applying the same background image to an external device (e.g., a watch-type wearable device) connected to the electronic device 101 as that of the electronic device 101. The processor 120 may reconfigure the background image having been applied to the electronic device 101 and transmit the reconfigured background image 1351 to the external device. The background image (e.g., a home screen 1313 image) applied to the electronic device 101 and the background image (e.g., the background image 1351) applied to the external device are generated by using the same object but may have different arrangement information.

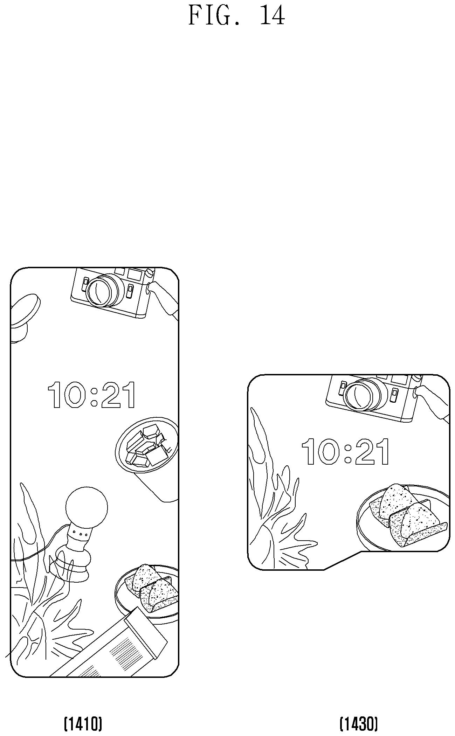

FIG. 14 is a view illustrating an example of displaying a background image differently according to a size of a display in an electronic device according to an embodiment.

Referring to FIG. 14, an electronic device (e.g., the electronic device 101 in FIG. 1) according to an embodiment may include two different sized displays. For example, the electronic device 101 may include a first display and a second display smaller than the first display. The processor 120 may generate a background image based on the first display. A first user interface 1410 may include the background image generated based on the first display. The processor 120 may reconfigure the background image generated based on the first display and apply same as the background image to the second display. A second user interface 1430 may include the background image generated based on the second display. The background image applied to the first display and the background image applied to the second display are generated by using the same object but may have different arrangement information.

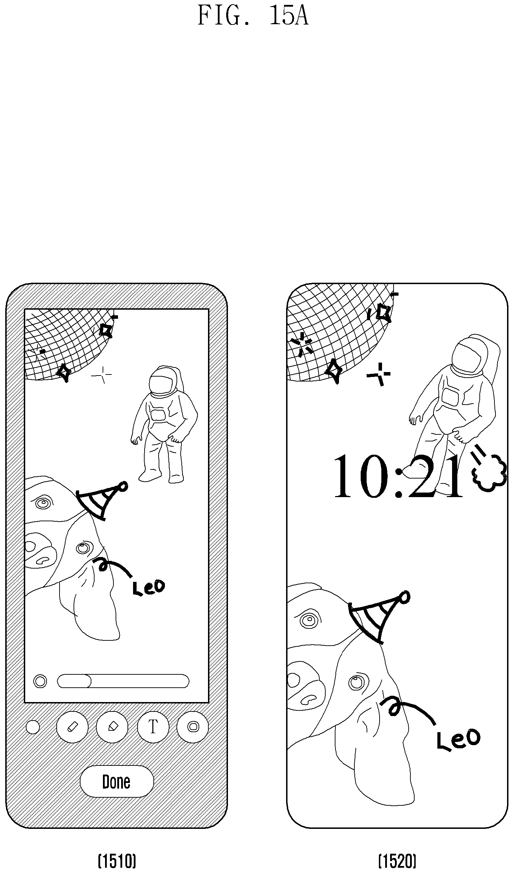

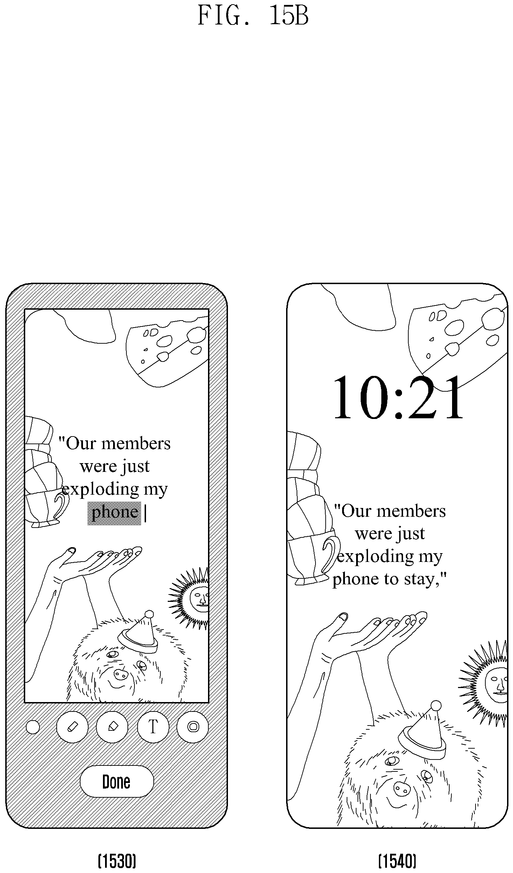

FIGS. 15A and 15B are views illustrating an example of applying a decorating effect to a background image in an electronic device according to an embodiment.

Referring to FIG. 15A, a processor (e.g., the processor 120 in FIG. 1) of an electronic device (e.g., the electronic device 101 in FIG. 1) according to an embodiment may apply a decoration effect on a background image. The processor 120 may provide a first user interface 1510 for applying the decoration annotation effect (e.g., a cone shape on a dog's head, Leo, or the like) on the background image based on a user input. The first user interface 1510 may illustrate an example of editing the background image based on a user input or drawing on the background image. A second user interface 1520 may correspond to a case in which editing of the background image is completed. The processor 120 may store the edited background image in a memory (e.g., the memory 130 in FIG. 1).

Referring to FIG. 15B, the processor 120 may provide a third user interface 1530 for adding text (e.g., Our members were just -) to the background image. The third user interface 1530 may illustrate an example of adding text to the background image based on a user input. A fourth user interface 1540 may correspond to a case in which editing of the background image is completed. The processor 120 may store the edited background image in the memory 130.

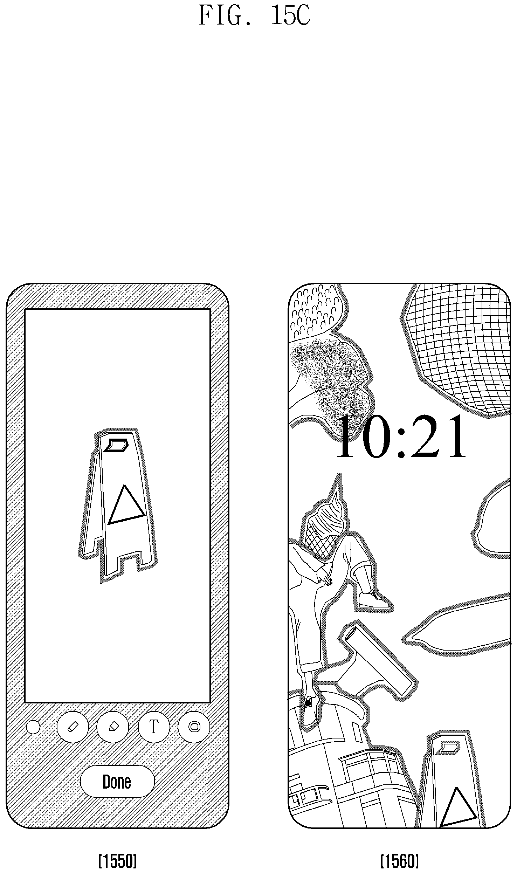

Referring to FIG. 15C, the processor 120 may provide a fifth user interface 1550 for editing an object included in the background image. The fifth user interface 1550 may illustrate an example of editing a thickness of an outline of the object included in the background image based on a user input. A sixth user interface 1560 may correspond to a case in which editing of the background image is completed. The processor 120 may store the edited background image in the memory 130.

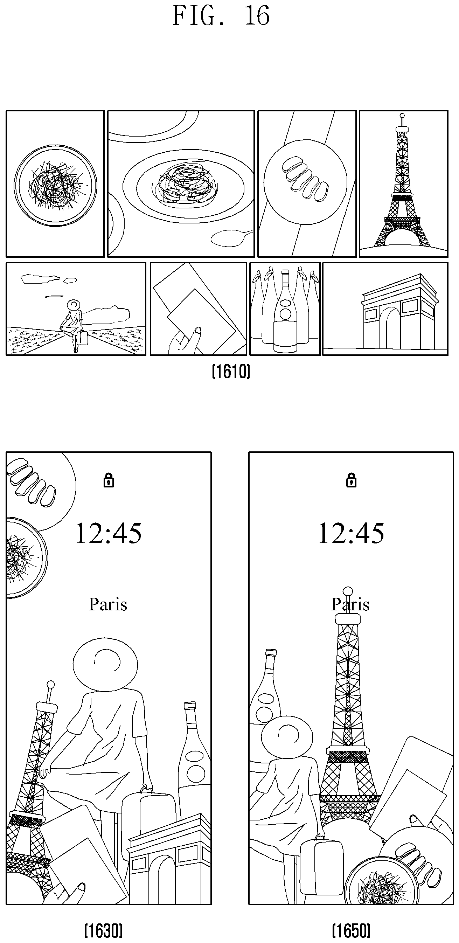

FIG. 16 is a view illustrating an example of generating an image based on a story of an image in an electronic device according to an embodiment.

Referring to FIG. 16, a processor (e.g., the processor 120 in FIG. 1) of an electronic device (e.g., the electronic device 101 in FIG. 1) according to an embodiment may analyze images stored in a memory (e.g., the memory 130 in FIG. 1) and group images having a similar story or the same position information. A first reference numeral 1610 may indicate a grouped image list. The processor 120 may generate a new image (e.g., a background image) based on an object included in the group images. The processor 120 may analyze the object included in the grouped images and adjust a color or an angle of a target object or apply different background colors.

For example, the processor 120 may generate a first background image 1630 or a second background image 1650 by varying arrangement information of the target objects, a color of the target objects, an angle of the target objects, or the background color. When comparing the first background image 1630 with the second background image 1650, it may be seen that arrangement positions of target objects are different. The first background image 1630 may include more target objects (e.g., food photos) than the second background image 1650. Alternatively, the processor 120 may provide the first background image 1630 or the second background image 1650 with a different position of the target object each time the home screen or lock screen is entered. The processor 120 may provide the first background image 1630 or the second background image 1650 based on sensing data acquired from an inertia sensor (e.g., the sensor module 176 in FIG. 1).

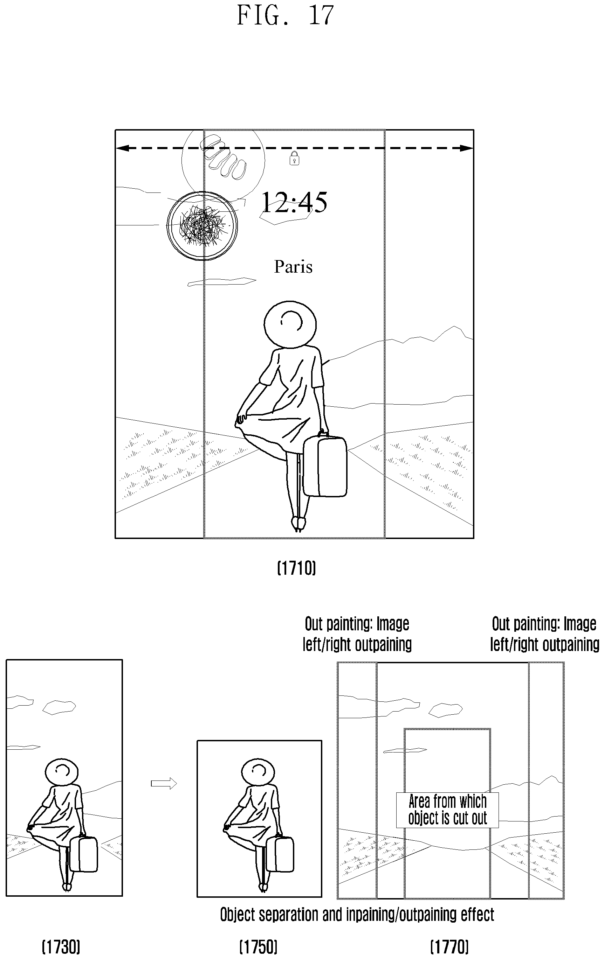

FIG. 17 is a view illustrating an example of applying a motion to an object included in an image in an electronic device according to an embodiment.

Referring to FIG. 17, a processor (e.g., the processor 120 in FIG. 1) of an electronic device (e.g., the electronic device 101 in FIG. 1) may generate a background image having a size bigger than that of a display (e.g., the display module 160 in FIG. 1). A first reference numeral 1710 may illustrate an example of generating a background image to have a size bigger than the size (e.g., a small rectangular box) of the display module 160 and image 1730 that corresponds to the size of the display module 160. The processor 120 may separate a target object 1750 and a background 1770 included in the image 1730, where the image 1730 may be an original image or a new image generated by any of the methods above. The processor 120 may then use image processing technology (e.g., an outpainting technology) to generate new outer portions of the background 1770 and/or image processing technology (e.g., an inpainting technology) to generate the background image from where the target about 1750 was removed. The outpainting/inpainting technology may include an AI-based (e.g., deep learning-based) image generation technology for filling in an outer/inner portion of an image based on a given image (e.g., an original image) to complete a new image. Subsequently, the processor 120 may apply a motion to the target object 1750 based on motion information of the separated target object 1750, where the motion information may be derived from a user touch input to the image 1730 when displayed on the display module 160, a user swiping input in the display module 160, or motion of the electronic device In particular, the processor 120 may cause the separated target object 1730 to move to different portions of the background image (e.g. left or right outpainted portions) such that motion of the target image around the background image can be achieved in response to the motion information.

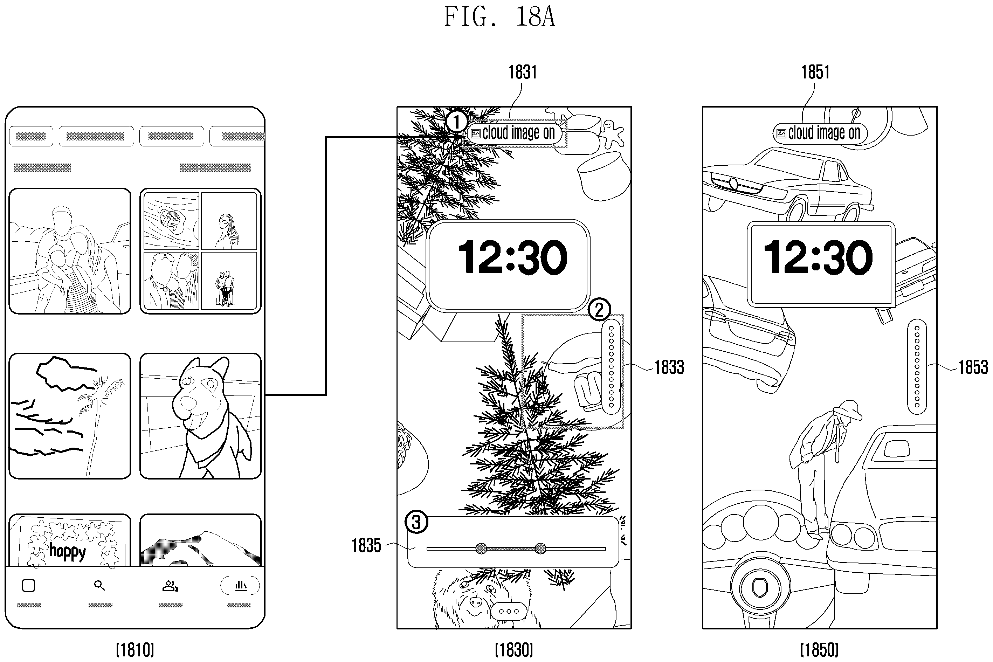

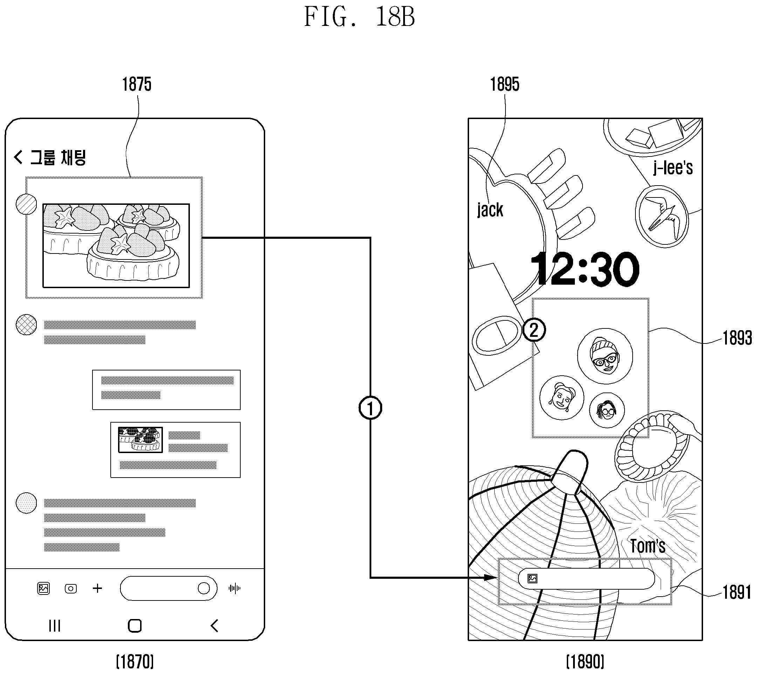

FIGS. 18A and 18B are views illustrating an example of generating a new image by using an image stored in a server in an electronic device according to an embodiment.

Referring to FIG. 18A, a processor (e.g., the processor 120 in FIG. 1) of an electronic device (e.g., the electronic device 101 in FIG. 1) according to an embodiment may continuously generate new images at configured times by using images stored on a cloud and a server (e.g., the server 108 in FIG. 1). The processor 120 may provide a cloud image loading function 1831 to a first background image 1830 that causes a new image to be generated. The first user interface 1810 may be a screen example of an image stored in the server 108. In case that the cloud image loading function 1831 is selected by the user, the processor 120 may classify images in the first background image 1830 by object type and image generation time to generate a new background image . When an indicator 1833 that scrolls upward or downward the first background image 1830 is selected, the processor 120 may provide categories of objects in the cloud that the user may select to generate a new background image. The processor 120 may provide a function 1835 of configuring a period from which images are used to generate a new background image. For example, the processor 120 may acquire cloud images by year or month through the period configuration function 1835 and generate a new image by using the acquired images. The processor 120 may continuously update new images for a predetermined time and display multiple images interchangeably. For example, the processor 120 may display the first background image 1830 for a predetermined time (e.g., 30 minutes or 1 hour) and then, when a predetermined time has elapsed, display a second background image 1850. The processor 120 may continuously generate new images and when a predetermined time has elapsed, display a new image as a third background image, again.

Referring to FIG. 18B, the processor 120 may generate a new image by using the intimacy with another person (e.g., a friend or family) and images shared with another person. The processor 120 may generate a new image by using images shared with another person through a message application server. The processor 120 may provide a shared image loading function 1891 to a third background image 1890 generated using a new image. In case that the shared image loading function 1891 is selected by the user, the processor 120 may acquire images shared through a message server. For example, the processor 120 may acquire images 1875 shared through an execution screen 1870 of a message application. The processor 120 may provide counterparty information 1893 to a third background image 1890. The counterparty information 1893 may include at least one of a profile image of another person, a name of a chat window with another person, and a level of intimacy with another person. The processor 120 may provide a name 1895 of another person who has transmitted an image shared through a chat room to the third background image 1890.

The above-described approaches provide efficient approaches to providing static or dynamic relevant (i.e. tailored to a user's taste) composite images to a user since it reduces the user inputs necessary to generate and repeatedly generate new images that may be used as background, album cover, gallery images, gallery summary images or any other representative image. For example, the user is no longer required to manually selected multiple images and combine them into a single image to generate a background image. Furthermore, as set out above, additional functionality such as searching and sharing can be integrated into such images thus providing an efficient interface for providing such functionality.

An operation method of an electronic device 101 according to an embodiment of the disclosure may include an operation of recognizing objects included in an image, an operation of determining categories corresponding to the objects, an operation of selecting a target object to be displayed on the display among the recognized objects, an operation of determining arrangement information of the target object, and an operation of providing a new image in which the target object is arranged based on arrangement information of the target object.

The operation of determining of the arrangement information of the target object may include an operation of grouping objects having an identical category, an operation of selecting a category based on the number of the grouped objects or the number of images for each category, an operation of dividing the display into object display areas in response to the selected category, an operation of identifying a size of the representative object of a specific category from among the recognized target objects, and an operation of adjusting the object display areas based on the identified size of the representative object.

The operation of providing the new image may include an operation of extracting a title based on tag information of the target objects, an operation of determining, in case that the title is extracted, whether a person object is included in the target objects, an operation of arranging, in case that the person object is included in the target objects, the title not to overlap the person object so as to generate a new image, and an operation of arranging, in case that the person object is not included in the target objects, the tile to correspond to a designated position of the display so as to generate a new image.

The method may further include an operation of changing a display position of a target object included in the new image, based on sensing data acquired from an inertia sensor 176.

The method may further include an operation of, in case that the target obj ect included in the new image is selected, generating a background image using the selected target object, or providing a function of sharing or duplicating the selected target object and a searching function.

The embodiments disclosed in the specification and the drawings are merely presented as specific examples to easily explain the technical features and help understanding of the disclosure and are not intended to limit the scope of the disclosure. Therefore, the scope of the disclosure should be construed as encompassing all changes or modifications derived from the technical ideas of the disclosure in addition to the embodiments disclosed herein.

## Claims

1. An electronic device (101) comprising:
a display (160);
a processor (120); and
memory (130),
wherein the memory stores instructions that, when executed by the processor, cause the electronic device to:
recognize one or more objects included in one or more stored images;
determine categories corresponding to the recognized one or more objects;
select at least one target object to be displayed on the display among the recognized one or more objects;
determine arrangement information of the at least one target object based on the determined categories and the images; and
provide a new image for display on the display in which the at least one target object is arranged based on the arrangement information.

2. The electronic device of claim 1, wherein the instructions, when executed by the processor, cause the electronic device to determine the at least one target object based on at least one of a generation time of the one or more images including the one or more objects, a usage time of the one or more images including the one or more objects, a size of the one or more objects, or a shape of the one or more objects.

3. The electronic device of claim 1, wherein the instructions, when executed by the processor, cause the electronic device to:
group objects having an identical category from among the one or more objects;
select one or more categories based on the number of the grouped objects or the number of images for each category;
divide the display into object display areas based on the selected one or more categories; and
provide the new image by displaying the at least one target object in the divided object display area, based on the arrangement information.

4. The electronic device of claim 3, wherein the instructions, when executed by the processor, cause the electronic device to:
identify a size of a representative object of a specific category from the target object; and
adjust the object display area based on the identified size of the representative object.

5. The electronic device of claim 1, wherein the instructions, when executed by the processor, cause the electronic device to:
extract a title based on tag information of the at least one target object;
determine, in case that the title is extracted, whether a person object is included in the at least one target object;
arrange, in case that the person object is included in the at least one target object, the title not to overlap the person object in the new image; and
arrange, in case that the person object is not included in the at least one target object, the title to correspond to a designated position of the display in the new image.

6. The electronic device of claim 1, wherein the instructions, when executed by the processor, cause the electronic device to:
determine an arrangement structure of the target object based on at least one of a category of the at least one target object, a size of the at least one target object, a shape of the at least one target object, a generation time of the one or more images including the at least one target object, and a usage time of the one or more images including the at least one target object; and
generate the new image in which the at least one target object is arranged based on the determined arrangement structure.

7. The electronic device of claim 1, further comprising an inertia sensor,
wherein the instructions, when executed by the processor, cause the electronic device to change a display position of the at least one target object included in the new image, based on sensing data acquired from the inertia sensor.

8. The electronic device of claim 1, wherein the instructions, when executed by the processor, cause the electronic device to:
determine a background color of the new image, based on color information of the at least one target object included in the new image; and
apply the determined background color to the new image.

9. The electronic device of claim 1, wherein the instructions, when executed by the processor, cause the electronic device to, in case that a target object included in the new image is selected, generate a background image using the selected target object, provide a function of sharing, duplicating the selected target object, or providing a searching function for the selected target object.

10. The electronic device of claim 1, wherein the instructions, when executed by the processor, cause the electronic device to, in case that there is a request for a background image corresponding to a size of a display different from a size of the display, reconfigure arrangement of the at least one target object included in the new image to generate a background image having the different size.

11. The electronic device of claim 1, wherein the instructions, when executed by the processor, cause the electronic device to:
edit the new image based on a user input; and
store the edited new image as a background image.

12. The electronic device of claim 1, wherein the instructions, when executed by the processor, cause the electronic device to select a determined category or selecting a category having the number of objects within the category equal to or greater than a threshold value.

13. The electronic device of claim 1, further comprising an inertia sensor,
wherein the instructions, when executed by the processor, cause the electronic device to:
generate the new image having a size bigger than that of the display; and
change a display position of a target object included in the new image, based on sensing data acquired from the inertia sensor.

14. The electronic device of claim 1, wherein the instructions, when executed by the processor, cause the electronic device to:
separate a target object and a background included in the new image;
process the separated background to inpaint the area of the separated target object; and
move the separated target object within the processed separated background based on motion information of the separated target object to generate a second new image.

15. An operation method of an electronic device (101) comprising display, the method comprising:
recognizing one or more objects included in one or more stored images;
determining categories corresponding to the recognized one or more objects;
selecting at least one target object to be displayed on the display among the recognized one or more objects;
determining arrangement information of the at least one target object based on the determined categories and the images; and
providing a new image for displaying on the display in which the at least one target object is arranged based on the arrangement information.
